# EUROPEAN PATENT APPLICATION

(11) **EP 1 921 561 A1**
(43) Date of publication of application: **14.05.2008**
(21) Application number: 06783106.5
(22) Date of filing: 28.08.2006
(51) Int. Cl.: G06F 21/24, G11B 20/10

(54) **AV DATA TRANSMISSION DEVICE AND AV DATA RECEPTION DEVICE**

(30) Priority: 01.09.2005 JP 2005253850
(71) Applicant: Matsushita Electric Industrial Co., Ltd., Kadoma-shi, Osaka 571-8501 (JP)
(72) Inventor: AYAKI, Yasushi, Shiromi, Chuo-ku, Osaka-shi, Osaka, 540-6207 (JP); TANABE, Takumi, Shiromi, Chuo-ku, Osaka-shi, Osaka, 540-6207 (JP); NISHIMURA, Takuya, Shiromi, Chuo-ku, Osaka-shi, Osaka, 540-6207 (JP); IITSUKA, Hiroyuki, Shiromi, Chuo-ku, Osaka-shi, Osaka, 540-6207 (JP)
(74) Representative: Pautex Schneider, Nicole Véronique
(86) International application number: PCT/JP2006/316877
(87) International publication number: WO 2007/029540

(57) **Abstract**

The AV data transmitting apparatus according to the present invention is an AV data transmitting apparatus which transmits AV data to an other apparatus, and includes: a recording unit that records AV data; an AV data transmitting unit which transmits, to the other apparatus, the AV data recorded by the recording unit; a notification receiving unit that receives, from the other apparatus, a success notification indicating that the recording of the AD data has succeeded; a control unit that performs processing to delete or invalidate the AV data recorded by the recording unit in the case where the success notification is received by the notification receiving unit; and a response transmitting unit that transmits, to the other apparatus, a notification response indicating a result of the processing performed by the control unit.

## Description

### Technical Field

The present invention relates to a technology which moves AV data to which copy control information has been added.

### Background of the Invention

In recent years, home networks are being implemented in which apparatuses in a home are connected so as to share various contents among one another. On the other hand, in the case of handling data such as recent movies or fee-based TV programs/music, in which copyright protection is necessary and to which copy control information has been added, it is necessary to provide a processing means for protecting the copyright. The most effective way to protect a copyright is to limit the use of data by encrypting the data in which copyright protection is necessary.

For example, when audio/video data (hereinafter referred to as "AV data") is transmitted using a network, in the case where the copyright of the AV data needs to be protected, the AV data is encrypted prior to the transmission. For example, Digital Transmission Contents Protection over Internet Protocol (DTCP-IP) has been standardized.

The DTCP-IP realizes copyright protection which includes an authentication function and an invalidation function that uses a key. In other words, in the case where AV data in which copyright protection is necessary is transmitted, an invalid apparatus is eliminated, and the AV data is encrypted prior to the transmission. Here, there are cases where AV data having copy control information (CCI) status of "No More Copies" is to be recorded in an other recording and reproducing apparatus. In this case, a function for moving the AV data (hereinafter referred to as "MOVE function") has been adopted in the DTCP-IP.

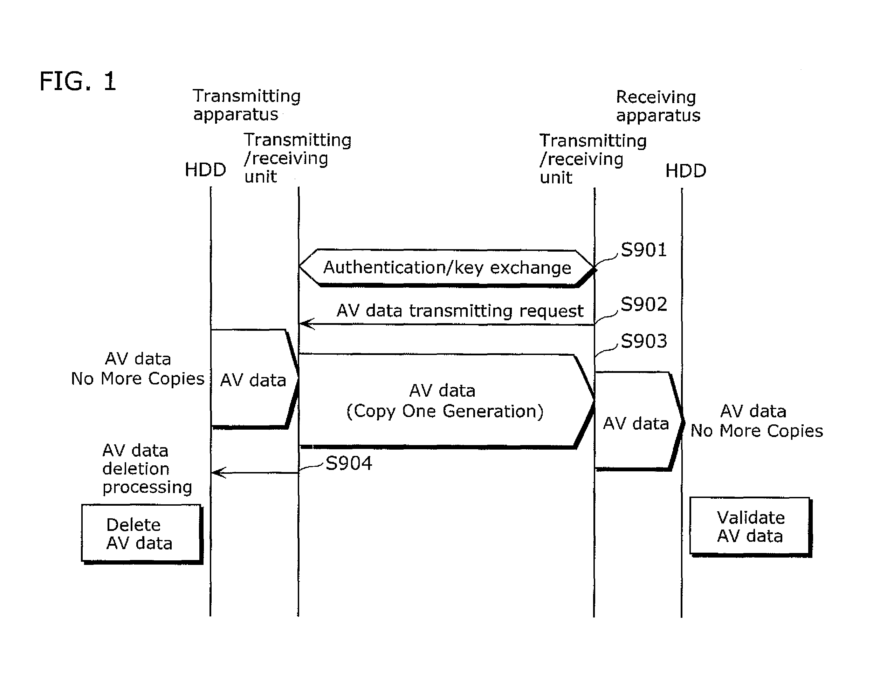

FIG. 1 is a diagram showing an execution sequence in the case where AV data is moved using conventional MOVE function.

First, an authentication/key exchange is performed between a transmitting apparatus (recording/reproducing apparatus at a transmitting side) and a receiving apparatus (recording/reproducing apparatus at a receiving side). After both sides have succeeded in the authentication, the transmitting apparatus provides the receiving apparatus with an exchange key so as to share the key between the transmitting apparatus and the receiving apparatus (S901). In the case of using MOVE execution mode, a transmitting apparatus provides only a single receiving apparatus with an exchange key.

Next, once the transmitting apparatus receives an AV data transmitting request from the receiving apparatus (S902), the transmitting apparatus rewrites the copy control information of the AV data read from the Hard Disk Drive (HDD) to the "Copy One Generation" status. Then, the transmitting apparatus encrypts the AV data with an encryption key generated using the exchange key, transmits the encrypted AV data to the receiving apparatus (S903), and then deletes the transmitted AV data (S904).

When the receiving apparatus receives the AV data from the transmitting apparatus, it decrypts the AV data using a decryption key generated using the exchange key. After the receiving apparatus changes the copy control information to the "No More Copies" status, it records the decrypted AV data.
Patent Reference 1: Japanese Laid-Open Patent Application No. 2000-149417 (20 pages)
Non-patent Reference 1: Digital Transmission Content Protection pecification Revision 1.4 (Informative Version)

### Disclosure of Invention

### Problems that Invention is to Solve

However, the transmitting apparatus sequentially deletes the AV data using the aforementioned conventional MOVE function after transmission. Therefore, in the case where the receiving apparatus has failed in recording the received AV data, there is a problem that the AV data is not moved to the receiving apparatus, but is lost instead.

In order to prevent loss of the AV data, it is conceivable to use a function in which the transmitting apparatus deletes the transmitted AV data after receiving a recording confirmation notification from the receiving apparatus. However, in the case where the recording confirmation notification is lost using such a function, the AV data is not deleted in the transmitting apparatus. As a result, the same AV data exists both in the transmitting apparatus and receiving apparatus. In this case, there is a danger that the AV data on the transmitting apparatus may be copied by accident or by an unauthorized user.

The present invention has been conceived in order to solve such problems, and the object of the present invention is to provide a recording/reproducing apparatus which can reduce the danger of losing AV data and can prevent with certainty a malfunction that the same AV data exists both in the transmitting apparatus and receiving apparatus, in the case where AV data having the "No More Copies" status is moved via a network.

### Means to Solve the Problems

In order to solve above problems, the AV data transmitting apparatus according to the present invention is an AV data transmitting apparatus which transmits AV data to an other apparatus, and it includes: a recording unit that records the AV data; an AV data transmitting unit that transmits the AV data recorded by the recording unit to the other apparatus; a notification receiving unit that receives a success notification indicating that the recording of the AV data has succeeded from the other apparatus; a control unit that deletes or invalidates the AV data recorded by the recording unit when the success notification is received by the notification receiving unit; and a response transmitting unit that transmits a notification response indicating a result of the processing performed by the control unit to the other apparatus. With this, in the case where the recording of the AV data has succeeded, after the AV data has been deleted or invalidated from the AV data transmitting apparatus, the AV data is held by the AV data receiving apparatus. Thus, it is possible to prevent a malfunction that the same AV data exists both in the AV data transmitting apparatus and AV data receiving apparatus.

Here, it is possible that the notification receiving unit receives a failure notification indicating that the recording of the AV data has failed from the other apparatus, and the control unit controls the AV data recorded by the recording unit to be usable when the failure notification is received by the notification receiving unit. With this, in the case where the recording of the AV data has failed, the AV data is held by the AV data transmitting apparatus. Thus, it is possible to prevent a malfunction that the AV data is lost.

In addition, it is possible that the notification receiving unit receives an abort notification indicating that the processing is aborted from the other apparatus, and the control unit controls the AV data recorded by the recording unit to be usable when the abort notification is received by the notification receiving unit. With this, in the case where the processing of moving the AV should be aborted, the AV data is held by the AV data transmitting apparatus. Thus, it is possible to prevent a malfunction that the AV data is lost.

In addition, it is possible that the AV data transmitting unit adds identification information to the AV data for identifying the AV data, and transmits the AV data with the identification information, the notification receiving unit receives the success notification having identification information added thereto, and the control unit controls the transmitted AV data not to be usable when the identification information which has been added to the transmitted AV data does not correspond to the identification information which has been added to the received success notification. With this, even in the case where the time when the AV data transmitting apparatus receives the success notification is delayed from the time when the AV data transmitting apparatus transmits the AV data, the AV data transmitting apparatus can delete with certainty the AV data corresponding to the received success notification.

In addition, it is possible that the AV data transmitting unit divides the AV data on a predetermined unit basis and transmits the AV data on the predetermined unit basis, and the control unit deletes or invalidates the AV data on the predetermined unit basis. With this, as the AV data is deleted per packet with certainty, even in the case where the AV data is lost by accident, the lost data size can be reduced.

In addition, it is possible that the AV data transmitting apparatus further includes a request transmitting unit that transmits a confirmation request for transmitting the success notification to the other apparatus. With this, as the AV data receiving apparatus transmits the success notification after receiving the confirmation request, the transmitting apparatus can determine when to perform the recording confirmation processing by itself.

In addition, it is possible that the notification receiving unit receives the success notification having verification information for verifying the success notification added thereto, and the control unit verifies whether or not the success notification is valid based on the verification information which has been added to the success notification, and controls the AV data not to be usable when the verification has failed. With this, as it is verified whether or not the success notification is valid, it is possible to prevent the unauthorized user from tampering with the success notification.

In addition, it is possible that the notification receiving unit receives the success notification having identification information for identifying the success notification added thereto, and the control unit confirms whether the success notification is not the success notification which has already been received based on the identification information which has been added to the success notification, and controls the AV data not to be usable when the confirmation has failed. With this, it is possible to prevent a malfunction that the success notification which has been already received is reprocessed.

In addition, it is possible that the response transmitting unit adds verification information for verifying the notification response to the notification response, and transmits the notification response with the added verification information. With this, as it is verified whether or not the notification response is valid, it is possible to prevent the unauthorized user from tampering with the notification response.

In order to solve the aforementioned problems, the AV data transmitting apparatus according to the present invention is an AV data receiving apparatus which receives AV data from an other apparatus, and it includes: an AV data receiving unit that receives the AV data from the other apparatus; a recording unit that records the AV data received by the AV data receiving unit; a notification transmitting unit that transmits a success notification indicating that the recording of the AV data has succeeded to the other apparatus when the recording of the AV data has succeeded; a response receiving unit that receives a notification response indicating a result of the processing performed by the other apparatus from the other apparatus; and a control unit that controls the AV data not to be usable after the AV data receiving unit receives the AV data, and controls the AV data to be usable after the response receiving unit receives the notification response. Thus, it is possible to prevent a malfunction that the same AV data exists both in the AV data transmitting apparatus and AV data receiving apparatus.

Here, it is possible that the notification transmitting unit transmits a failure notification indicating that the recording of the AV data has failed to the other apparatus, and the control unit controls the AV data not to be usable after the AV data receiving unit receives the AV data, and controls the AV data not to be usable even after the response receiving unit receives the notification response. With this, in the case where the recording of the AV data has failed, the AV data is held by the AV data transmitting apparatus. Thus, it is possible to prevent a malfunction that the AV data is lost.

In addition, it is possible that the notification transmitting unit transmits an abort notification indicating that the processing is aborted to the other apparatus, and the control unit controls the AV data not to be usable after the AV data receiving unit receives the AV data and controls the AV data not to be usable even after the response receiving unit receives the notification response. With this, in the case where the processing of moving the AV should be aborted, the AV data is held by the AV data transmitting apparatus. Thus, it is possible to prevent a malfunction that the AV data is lost.

In addition, it is possible that the AV data receiving unit receives the AV data having identification information for identifying the AV data added thereto, and the notification transmitting unit transmits the success notification having the identification information. With this, even in the case where the time when the AV data transmitting apparatus receives the success notification is delayed from the time when the AV data transmitting apparatus transmits the AV data, the AV data transmitting apparatus can delete with certainty the AV data corresponding to the received success notification.

In addition, it is possible that the AV data receiving unit receives the AV data divided on a predetermined unit basis, and the control unit controls the success notification so as to transmit the success notification on the predetermined unit basis. With this, as the AV data is deleted per packet with certainty, even in the case where the AV data is lost by accident, the lost data size can be reduced.

In addition, it is possible that the AV data receiving apparatus further includes a request receiving unit that receives a confirmation request for transmitting the success notification from the other apparatus, wherein the control unit controls a confirmation notification so as to be transmitted to the other apparatus when the confirmation request is received by the request receiving unit, and the confirmation notification indicates a result of the recording of the AV data. With this, as the AV data receiving apparatus transmits the success notification after receiving the confirmation request, the receiving apparatus can determine when to perform the recording confirmation processing by itself.

In addition, it is possible that the response receiving unit receives the notification response having verification information for verifying the success notification added thereto, and the control unit verifies whether or not the notification response is valid based on the verification information which has been added to the notification response, and controls the AV data not to be usable when the verification has failed. With this, as it is verified whether or not the success notification is valid, it is possible to prevent the unauthorized user from tampering with the success notification.

In addition, it is possible that the notification transmitting unit adds identification information for identifying the success notification to the success notification, and transmits the success notification with the added identification information. With this, it is possible to prevent a malfunction that the success notification which has been already received is reprocessed.

In addition, it is possible that the notification transmitting unit adds verification information for verifying the success notification to the success notification, and transmits the success notification with the added verification information. With this, as it is verified whether or not the notification response is valid, it is possible to prevent the unauthorized user from tampering with the notification response.

Note that it is not only possible to embody the present invention as the above-described AV data transmitting apparatus and AV data receiving apparatus, but also as an AV data transmitting method and an AV data receiving method which include, as their respective steps, the characteristic units included in such AV data transmitting apparatus and AV data receiving apparatus, as well as programs causing a computer to execute these steps. It should be also noted that such programs can be distributed on a recording medium such as a CD-ROM and via a transmitting medium such as the Internet.

### Effects of the Invention

In the case where AV data having the "No More Copies" status is moved to an other recording/reproducing apparatus via a network, the present invention can reduce a danger that the AV data is lost and prevent with certainty a malfunction that the same AV data exists both in a transmitting apparatus and a receiving apparatus.

### Brief Description of Drawings

FIG. 1 is a diagram which shows an execution sequence in the case where AV data is moved using conventional MOVE function.
FIG. 2 is a diagram which shows total configuration of the first embodiment of the present invention.
FIG. 3 is a diagram which shows configuration of the transmitting apparatus in the first embodiment of the present invention.
FIG. 4 is a diagram which shows a format of an AV data packet in the first embodiment of the present invention.
FIG. 5A is a diagram which shows a format of a recording confirmation notification command in the first embodiment of the present invention.
FIG. 5B is a diagram which shows a format of a recording confirmation notification command in the first embodiment of the present invention.
FIG. 6 is a diagram which shows a format of an AV data management table in the first embodiment of the present invention.
FIG. 7 is a diagram which shows configuration of the receiving apparatus in the first embodiment of the present invention.
FIG. 8 is a diagram which shows an operation of the transmitting apparatus in the first embodiment of the present invention.
FIG. 9 is a diagram which shows the details of recording confirmation processing in the first embodiment of the present invention.
FIG. 10 is a diagram which shows an operation of the receiving apparatus in the first embodiment of the present invention.
FIG.11 is a diagram which shows the details of recording confirmation processing in the first embodiment of the present invention.
FIG. 12 is a diagram which shows a communication sequence in the case where moving of AV data has succeeded.
FIG. 13A is a diagram which shows a format of a notification command in the second embodiment of the present invention.
FIG. 13B is a diagram which shows a format of a command response in the second embodiment of the present invention.
FIG. 14 is a diagram which shows a communication sequence in the case where moving of AV data has succeeded.
FIG. 15 is a diagram which shows a sequence in the case where the transmitting of a notification command has been delayed.
FIG. 16A is a diagram which shows a format of a notification command in the third embodiment of the present invention.
FIG. 16B is a diagram which shows a format of a command response in the third embodiment of the present invention.
FIG.17 is a diagram which shows an operation of the transmitting apparatus in the third embodiment of the present invention.
FIG.18 is a diagram which shows an operation of the receiving apparatus in the third embodiment of the present invention.
FIG. 19 is a diagram which shows a communication sequence in the case where moving of AV data has succeeded.
FIG. 20A is a diagram which shows a format of a recording confirmation request command in the fourth embodiment of the present invention.
FIG. 20B is a diagram which shows a format of a recording confirmation request command response in the fourth embodiment of the present invention.
FIG. 21 is a diagram which shows a flow of recording confirmation processing in the fourth embodiment of the present invention.
FIG.22 is a diagram which shows an operation of the receiving apparatus in the fourth embodiment of the present invention.
FIG. 23 is a diagram which shows a communication sequence in the case where moving of AV data has succeeded.
FIG. 24 is a diagram which shows a communication sequence in the case where moving of AV data has succeeded.
FIG. 25 is a diagram which shows a communication sequence in the case where moving of AV data has not succeeded.
FIG. 26 is a diagram which shows a communication sequence in the case where moving of AV data has not succeeded.
FIG. 27 is a diagram which shows a communication sequence in the case where moving of AV data has not succeeded.
FIG. 28 is a diagram which shows a communication sequence in the case where moving of AV data has not succeeded.
FIG. 29 is a diagram which shows a communication sequence in the case where moving of AV data has not succeeded.

### Numerical References

- 1, 2: Recording/reproducing apparatus
- 3: Digital tuner
- 21: Transmitting/receiving unit
- 22: Encryption processing unit
- 23: Key exchange processing unit
- 24: Authentication processing unit
- 25: Copy control unit
- 26: HDD
- 31: Transmitting/receiving unit
- 32: Decryption processing unit
- 33: Key exchange processing unit
- 34: Authentication processing unit
- 35: Copy control unit
- 36: HDD
- 555, S155, 5355, 5405: Recording confirmation processing
- 5507, 5557: Recording confirmation notification processing

### Best Mode for Carrying Out the Invention

Preferred embodiments of the present invention will hereinafter be described with reference to the attached diagrams.

### (First Embodiment)

First, the first embodiment is described.

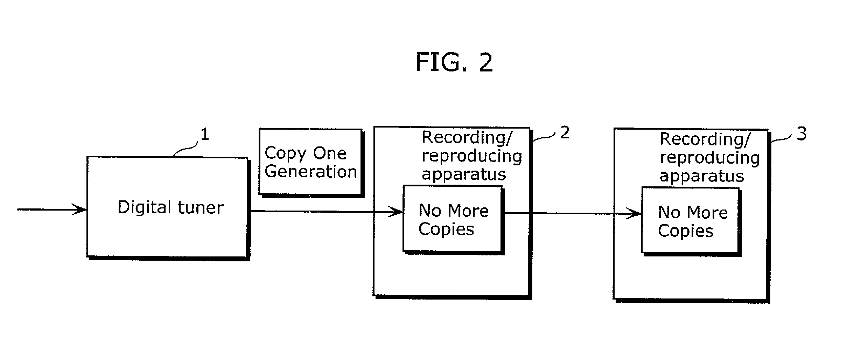

FIG.2 is a diagram which shows total configuration of this first embodiment. As shown in this diagram, a recording/reproducing apparatus 2 is connected to another recording/reproducing apparatus 3 and a digital tuner 1 via a network. The digital tuner 1 receives digital broadcasting and outputs the received digital contents (AV data) to the recording/reproducing apparatus 2. The recording/reproducing apparatus 2 receives and records the AV data from the digital tuner 1, and then transmits the recorded AV data to the recording/reproducing apparatus 3. The recording/reproducing apparatus 3 receives and records the AV data from the recording/reproducing apparatus 2.

Here, it is assumed that the apparatuses receive the digital contents in which a copy control information status is "Copy One Generation". The copy control information of the broadcasting contents (AV data) is changed to the "No More Copies" status when the recording/reproducing apparatus 2 records the broadcasting contents. Therefore, the AV data recorded in the recording/reproducing apparatus 2 is moved to the recording/reproducing apparatus 3 in MOVE function. Note that the "recording/reproducing apparatus 2" is referred to as a "transmitting apparatus 2", and the "recording/reproducing apparatus 3" is referred to as a "receiving apparatus 3".

### <The configuration of the transmitting apparatus 2>

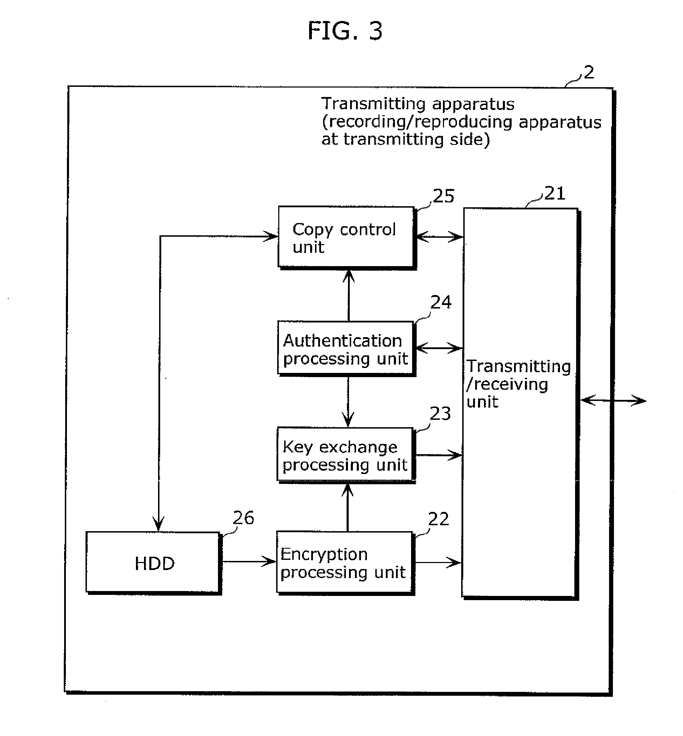

FIG.3 is a diagram which shows configuration of the transmitting apparatus 2 in this first embodiment. As shown in this diagram, the transmitting apparatus 2 includes a transmitting/receiving unit 21, an encryption processing unit 22, a key exchange processing unit 23, an authentication processing unit 24, a copy control unit 25, and an HDD (Hard Disk Drive) 26.

The transmitting/receiving unit 21 is a processing unit which corresponds to an AV data transmitting unit, a notification receiving unit, or a response transmitting unit in the present invention. More specifically, it is a digital interface which transmits AV data to a network, or transmits and receives a command between other apparatuses which are connected to the network.

The encryption processing unit 22 encrypts the AV data which is read from the HDD 26. An encryption key is generated using an exchange key (Kx) received from the key exchange processing unit 23, copy control information (EMI) and a key updating counter value (Nc) which have been received from the copy control unit 25. The encrypted AV data is divided into AV data packets, and the packets are respectively transmitted via the transmitting/receiving unit 21.

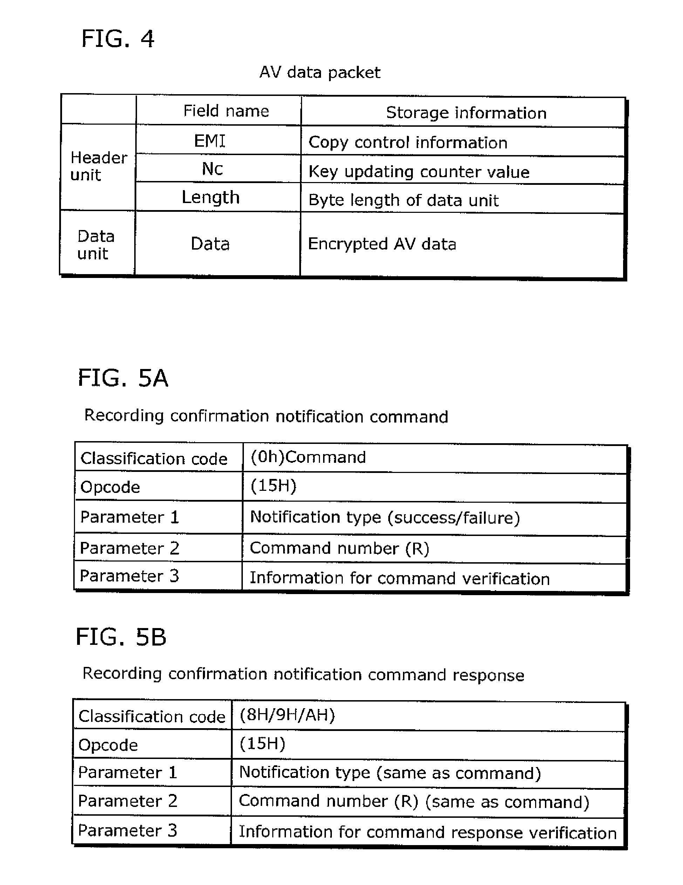

FIG. 4 is a diagram which shows a format of an AV data packet in this first embodiment. An AV data packet is configured of a header unit and a data unit. The header unit includes copy control information (E-EMI), a key updating counter value (Nc), and a byte length (Length) of the data unit. The copy control information is information regarding copy control of AV data. More specifically, it is an identification code showing one of "Copy Never", "No More Copies", "Copy One Generation", "Copy Free", and "during MOVE". The "during MOVE" is set when AV data having the "No More Copies" status is moved. The key updating counter value (Nc) is a counter value which is used when a decryption key is generated. Every time the receiving apparatus 3 issues a request to transmit AV data, the counter value increases by 1, and every time the AV data transmitting amount exceeds 128MB in response to the AV data request, the counter value also increases by 1. In this case, the transmitting apparatus 2 generates the AV data packets by dividing the AV data per 128MB.

The key exchange processing unit 23 generates an exchange key so that the receiving apparatus 3 may use it for decrypting the encryption of the AV data. Then, using the authentication information received from the authentication processing unit 24, the key exchange processing unit 23 encrypts the generated exchange key. The generated exchange key is outputted via the transmitting/receiving unit 21.

The authentication processing unit 24 receives, from the receiving apparatus 3, an authentication request including identification information of the apparatus, performs authentication processing, and shares the authentication information with the receiving apparatus 3. After the authentication processing unit 24 has performed a key exchange with the single receiving apparatus 3 in MOVE mode, as long as the exchanged exchange key is held, the authentication processing unit 24 rejects an authentication request from an other receiving apparatus.

The copy control unit 25 is a processing unit which corresponds to a control unit in the present invention, and processes a recording confirmation notification command received from the receiving apparatus 3. For example, in the case where the copy control unit 25 judges that moving of the AV data has failed by analyzing the details of the recording confirmation notification command, an AV data management table in the HDD 26 is rewritten so as to hold the transmitted AV data with the unchanged valid status. On the other hand, in the case where the copy control unit 25 judges that moving of AV data has succeeded, the AV data management table in the HDD 26 is rewritten so as to invalidate the transmitted AV data. Furthermore, the copy control unit 25 generates a response corresponding to the recording confirmation notification command. The generated response is transmitted to the receiving apparatus 3 by the transmitting/receiving unit 21.

FIG.5A is a diagram which shows a format of a recording confirmation notification command in this first embodiment. This recording confirmation notification command (hereinafter referred to as "notification command") corresponds to a success notification or a failure notification according to the present invention. FIG.5B is a diagram which shows a format of a recording confirmation notification command response in this first embodiment. This recording confirmation notification command response (hereinafter referred to as "command response") corresponds to a notification response according to the present invention.

The classification code "OH" indicates a command. The classification codes "8H/9H/AH" indicate command responses. The definitions of the classification codes "8H/9H/AH" are respectively indicated as follows.

8H NOT IMPLEMENTED (a received command is not supported)
9H ACCEPTED (command processing is accepted)
AH REJECTED (command reject)

In the case where the transmitting apparatus 2 receives a confirmation command (recording failure) from the receiving apparatus 3, when the transmitting apparatus 2 revalidates the AV data, it transmits a command response (ACCPTED) to the receiving apparatus 3, and when the transmitting apparatus 2 does not revalidate the AV data, it transmits a command response (REJECTED) to the receiving apparatus 3. On the other hand, in the case where the transmitting apparatus 2 receives a confirmation command (recording success) from the receiving apparatus 3, when the AV data which should be invalidated is present, the transmitting apparatus 2 invalidates the AV data and transmits the command response (ACCPTED) to the receiving apparatus 3, and when the AV data which should be invalidated is not present, the transmitting apparatus 2 transmits the command response (REJECTED) to the receiving apparatus 3. With this operation, the receiving apparatus 3 can know whether the AV data is invalidated or revalidated in the transmitting apparatus 2, depending on the classification code of the command response received from the transmitting apparatus 2, namely, ACCPTED or REJECTED.

The opcode in the diagram indicates a classification of a command, and "15H" indicates that the command is a notification command. As an opcode of the command response, the same opcode as the notification command is set.

Other fields are for setting parameters unique to respective commands.

In other words, in the case of a notification command, as shown in FIG. 5A, a notification type, a command number (R), and information for command verification are set. As a notification type, a result of recording processing, in other words, a value indicating whether the recording has succeeded or failed is set. As a command number (R), a random number is used as the initial value, and every time a notification command is transmitted, the value increases by 1. The information for command verification is digital signature information. This digital signature information is generated with the use of an exchange key (Kx), using a notification type and a command number (R).

On the other hand, in the case of a notification command response, as shown in FIG. 5B, a notification type, a command number (R), and information for command response verification are set. As a notification type and a command number (R), the same values as the parameters of the received notification command are set. The information for command response verification is digital signature information. This digital signature information is generated with the use of an exchange key (Kx), using a notification type and a command number (R).

The HDD 26 is a processing unit which corresponds to a recording unit according to the present invention. More specifically, it records the AV data received from the digital tuner 3 and the AV data management table for managing the AV data. The AV data recorded in the HDD 26 is outputted to the encryption processing unit 22.

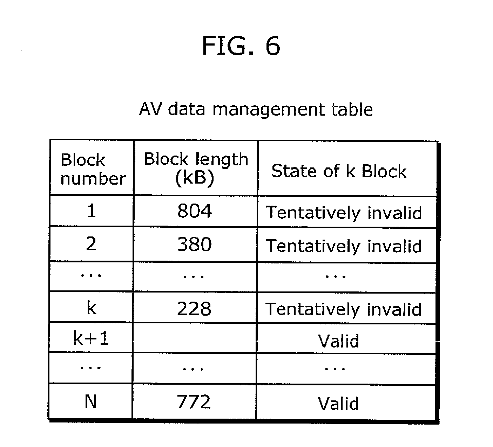

FIG. 6 is a diagram which shows a format of an AV data management table in this first embodiment. In the AV data management table, AV data is managed for every block, and the block number, block length, and block state are stored for every block. There are three block states, "valid", "tentatively invalid", and "invalid". The block data in a "tentatively invalid" or "invalid" state can not be used. Furthermore, once the AV data becomes "invalid", it can not be restored to the "valid" state. However, the AV data in a "tentatively invalid" state can be restored to the "valid" state.

### <The configuration of the receiving apparatus 3>

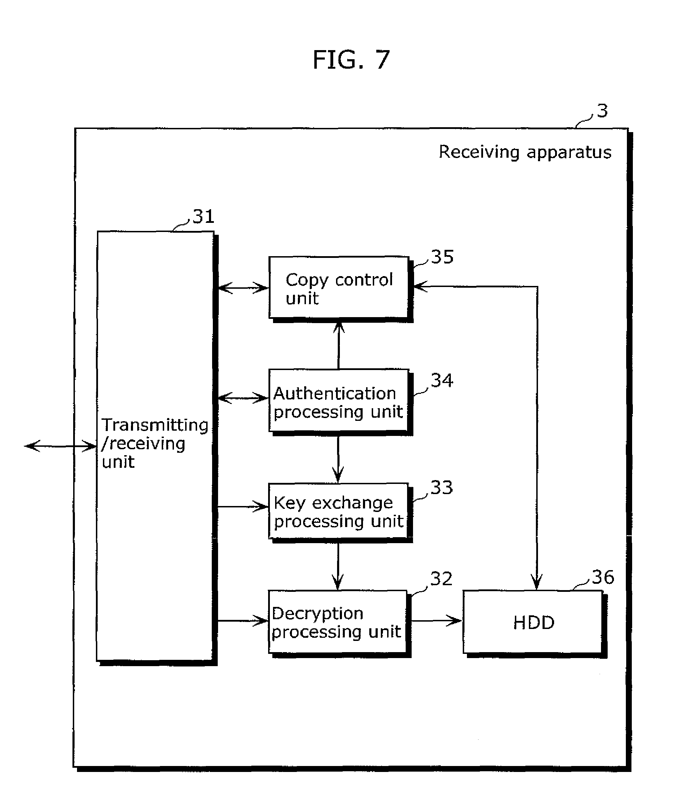

FIG.7 is a diagram which shows configuration of the receiving apparatus 3 in this first embodiment. As shown in this diagram, the receiving apparatus 3 includes a transmitting/receiving unit 31, a decryption processing unit 32, a key exchange processing unit 33, an authentication processing unit 34, a copy control unit 35, and an HDD (Hard Disk Drive) 36.

The transmitting/receiving unit 31 is a processing unit which corresponds to an AV data receiving unit, a notification transmitting unit, or a response receiving unit in the present invention. More specifically, it is a digital interface which transmits AV data via a network or transmits and receives a command between other apparatuses which are connected to the network.

The decryption processing unit 32 decrypts the encryption of the AV data received from the transmitting apparatus 2. The decryption key is generated by using an exchange key (Kx) received from the key exchange processing unit 33, copy control information (EMI) and a key updating counter value (Nc) which are set in the header units in each of the AV data packets,. The AV data which has been unencrypted by the decryption of the decryption processing unit 32 is recorded in the HDD 36.

The key exchange processing unit 33 processes the exchange key (Kx) received from the transmitting apparatus 2 using the authentication information received from the authentication processing unit 34, and transmits the key to the decryption processing unit 32.

The authentication processing unit 34 requests the authentication processing unit 24 of the transmitting apparatus 2 to start authentication, performs the authentication processing, and shares the authentication information with the transmitting apparatus 2.

The copy control unit 35 is a processing unit which corresponds to a control unit in the present invention. In other words, it generates a notification command based on a result of the recording in the HDD 36, transmits it to the transmitting apparatus 2 via the transmitting/receiving unit 31, and processes the command response received from the transmitting apparatus 2 via the transmitting/receiving unit 31. More specifically, in the case where the copy control unit 35 judges that AV data has been invalidated in the transmitting apparatus 2 by analyzing the command response, the AV data management table in the HDD 36 is rewritten so as to validate the AV data received from the transmitting apparatus 2. On the other hand, in the case where the copy control unit 35 can not judge that AV data has been invalidated in the transmitting apparatus 2, the AV data received from the transmitting apparatus 2 is invalidated.

The HDD 36 is a processing unit which corresponds to a recording unit in the present invention. More specifically, it records the AV data outputted by the decryption processing unit 35 and the AV data management table for managing the AV data. The HDD 36 notifies the copy control unit 35 of a recording result indicating whether the recording processing of the AV data has succeeded or failed. The format of the AV management table recorded in the HDD 36 is the same as the one shown in FIG. 6.

Next, the operations of the transmitting apparatus 2 and receiving apparatus 3 which are configured as described above are described.

### <The operation of the transmitting apparatus 2>

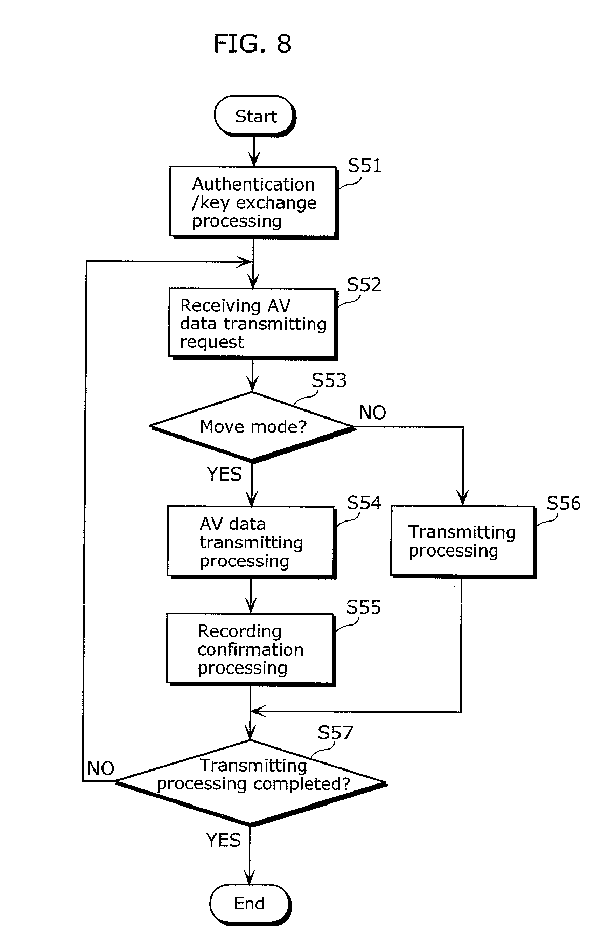

FIG.8 is a diagram which shows the operation of the transmitting apparatus 2 in this first embodiment. Here, the diagram shows a flow from the authentication/key exchange processing at the time of encryption transmission to the encryption transmission processing.

First, the authentication processing unit 24 of the transmitting apparatus 2 starts the authentication/key exchange processing in response to an authentication request from the receiving apparatus 3, shares an exchange key with the receiving apparatus 3, and ends the authentication/key exchange processing (S51).

Next, the copy control unit 25 of the receiving apparatus 3 receives an AV data transmitting request from the receiving apparatus 3 (S52). In the case where the AV data transmitting request is a request of moving the AV data, the AV data transmitting processing in MOVE mode (S54) and the recording confirmation processing (S55) are executed. Other than this case, the AV data transmitting processing is executed in the normal mode (S56).

Finally, the transmitting apparatus 2 judges whether or not the transmitting processing should be completed (S57). In the case where the AV data which should be transmitted remains, the transmitting apparatus 2 receives an AV data transmitting request from the receiving apparatus 3 (S52), and repeats the aforementioned transmitting processing.

### <The recording confirmation processing of the transmitting apparatus 2>

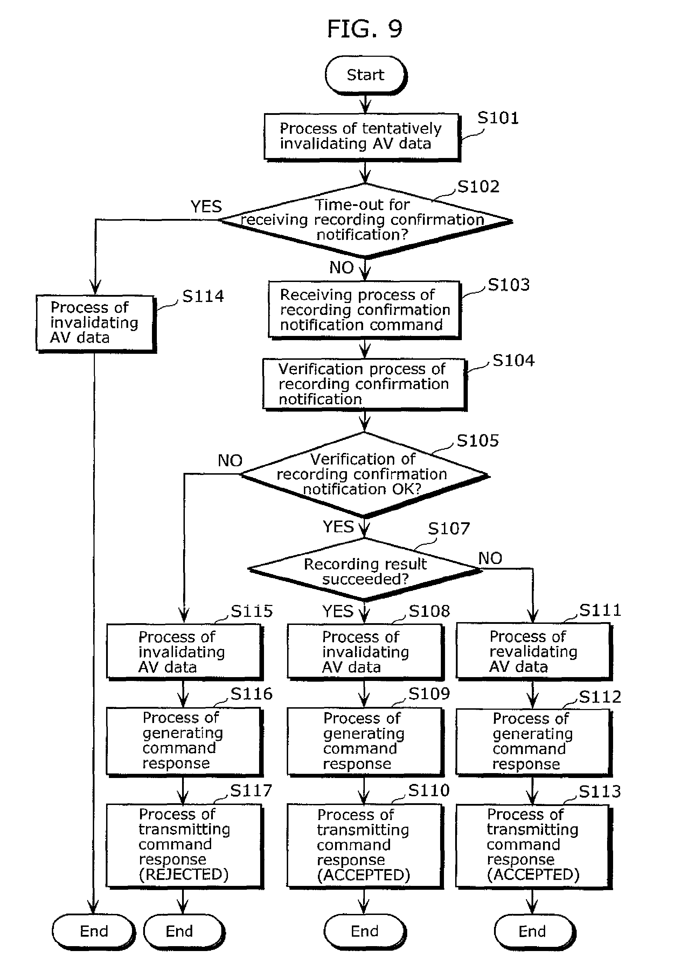

FIG.9 is a diagram which shows the details of the recording confirmation processing of S55 in this first embodiment. This recording confirmation processing of S55 is executed by the copy control unit 25 of the transmitting apparatus 2.

After completion of transmission of the AV data, the copy control unit 25 rewrites the AV data management table in the HDD 26, tentatively invalidates the AV data (S101), and enters a wait state for receiving a notification command.

Next, the copy control unit 25 judges whether to have received the notification command within a predetermined time (1 second) (S102), and upon time-out, the AV data is invalidated (S114) and the processing ends (S103). Then, in the case of receiving the notification command without causing any time-out, the receiving process is started (S103).

Next, the command number and information for command verification of the notification command are checked (S104). In other words, in the case of receiving the notification command for two or more times, it is confirmed whether or not the command number (R) increases by 1 from the command number (R) which has been received last time, and whether or not the command is a valid command transmitted from an valid transmitting apparatus based on the information for command verification.

In the case where the verification result is accepted, the processing proceeds to S107. On the other hand, in the case where the verification result is not accepted, the AV data invalidating process is executed (S115). In other words, the AV data management table in the HDD 26 is rewritten so as to disable the subsequent use of the transmitted AV data as the AV data is in an invalid state (S101). Then, a process for generating a command response (REJECTD) is executed (S116), a process for transmitting the command response to the receiving apparatus 3 (S117) is executed, and the processing ends.

The notification type of a notification command is confirmed in S107. In the case where the notification type is "success", the processing proceeds to an AV data invalidating process (S108), and in the case where the notification type is not "success", the processing proceeds to an AV data revalidating process (S112).

In the AV data invalidating process (S108), the AV data management table in the HDD 26 is rewritten so as to disable the subsequent use of the transmitted AV data as the AV data is in an invalid state. Then, a process for generating a command response (ACCEPTED) is executed (S109), a process for transmitting the command response to the receiving apparatus 3 is executed (S110), and the processing ends.

In the AV data revalidating process (S111), the AV data management table in the HDD 26 is rewritten so as to revalidate the transmitted AV data. Then, a process for generating a command response (ACCEPTED) is executed (S112), a process for transmitting the command response to the receiving apparatus 3 is executed (S113), and the processing ends.

### <The operation of the receiving apparatus 3>

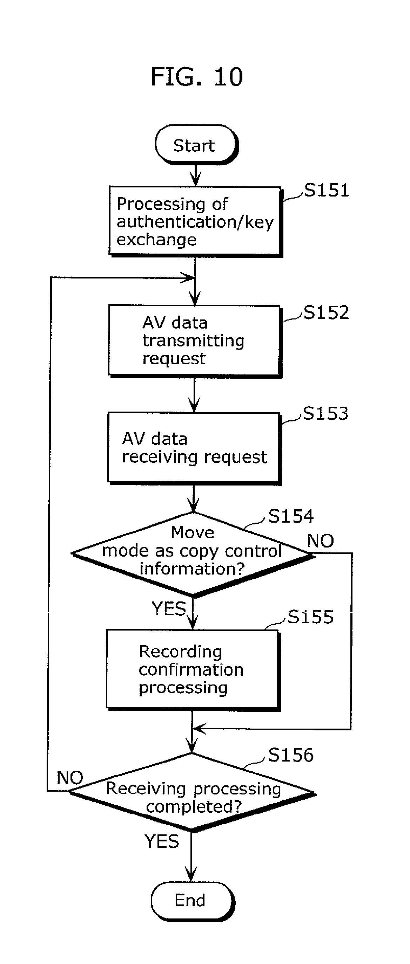

FIG.10 is a diagram which shows an operation of the receiving apparatus 3 in this first embodiment. Here, the diagram shows a flow from the authentication/key exchange processing at the time of encryption transmission to the encryption transmission processing.

First, the authentication processing unit 34 of the receiving apparatus 3 starts the authentication/key exchange processing by transmitting an authentication request to the transmitting apparatus 2, obtains an exchange key from the transmitting apparatus 2, and ends the authentication/key exchange processing (S151).

Next, the copy control unit 35 of the receiving apparatus 3 transmits, to the transmitting apparatus 2, an AV data transmitting request which requests moving the AV data (S152), and receives the AV data from the transmitting apparatus 2 (S153). Then, the copy control information (EMI) which is set in the header unit of the received AV data packet is checked (S154). As a result, in the case of MOVE mode, the recording confirmation processing S155 is executed, and in the case of other than the MOVE mode, the recording confirmation processing is not executed.

Finally, the receiving apparatus 3 judges whether or not the receiving processing should be completed (S156). In the case where the AV data which should be received remains, the receiving apparatus 3 transmits an AV data receiving request to the transmitting apparatus 2 (S152), and repeats the aforementioned receiving processing.

### <The recording confirmation processing of the receiving apparatus 3>

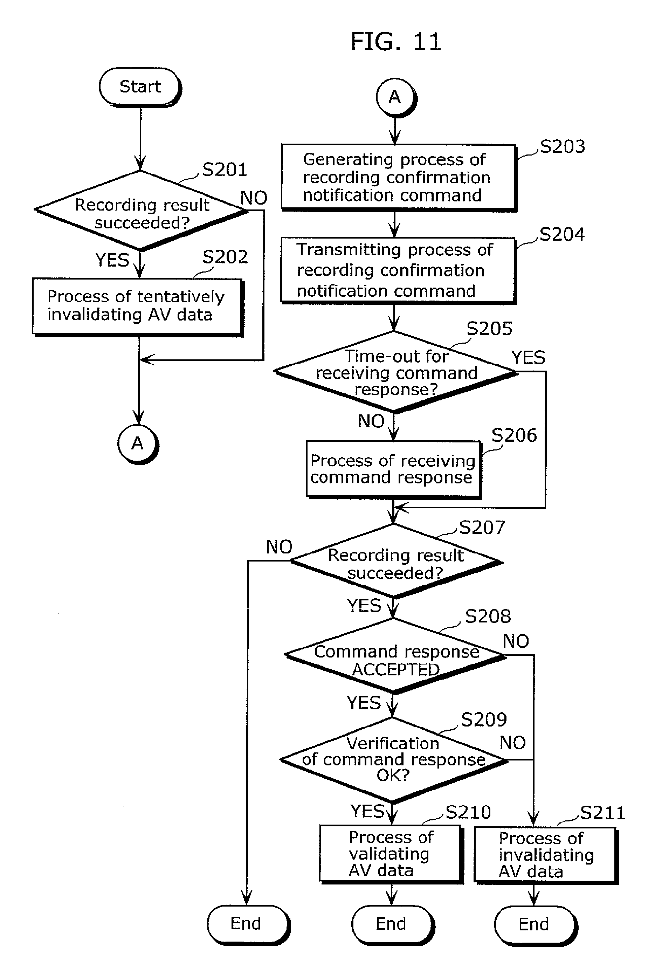

FIG.11 is a diagram which shows the details of the recording confirmation processing S155 in this first embodiment. This recording confirmation processing S155 is executed by the copy control unit 35 of the receiving apparatus 3.

The copy control unit 35 confirms a recording result of the AV data (S201), and in the case where the AV data is recorded in the HDD 36 and the recording succeeds, "tentatively invalid" is set in the AV data management table in the HDD 36, and the AV data is tentatively placed in an invalid state (5202).

Next, a notification command is generated (S203). In other words, depending on a recording result, the notification type of a notification command is set as success or failure, and a command number (R) and information for command verification are generated and set as a notification command. Then, the generated notification command is transmitted to the transmitting apparatus 2 (S204), and the copy control unit 25 enters a command response wait state.

Next, the copy control unit 35 judges whether to have received the notification command within a predetermined time (1 second) (S205), and upon time-out, the processing proceeds to 5207. On the other hand, in the case of receiving the notification command without causing any time-out, a receiving process is started (S205).

In S207, the recording result of the AV data is confirmed again. In the case where the recording has not succeeded, the processing ends, and in the case where the recording has succeeded, the classification code of the command response is checked (S208). As a result, in the case where the classification code is 9H indicating that the command process is accepted (ACCEPTED), the command response is further verified in 5209.

In 5209, it is checked whether or not a notification type code and a command number (R) are equal to the respective values in each parameter field of the transmitted notification command. Furthermore, it is checked whether or not the command response is a valid command response transmitted from a valid transmitting apparatus by checking the information for command response verification. In the case where the check result is accepted, the AV data management table in the HDD 36 is rewritten to "valid" so as to validate the AV data (S210), and the processing ends. On the other hand, in the case where the classification code is not 9H (ACCEPTED), or where the check result is not accepted, the AV data management table in the HDD 36 is rewritten to "invalid" so as to invalidate the AV data (S211), and the processing ends.

Based on the aforementioned operations of the transmitting apparatus 2 and the receiving apparatus 3, the whole operation of the processing of moving the AV data is described hereinafter.

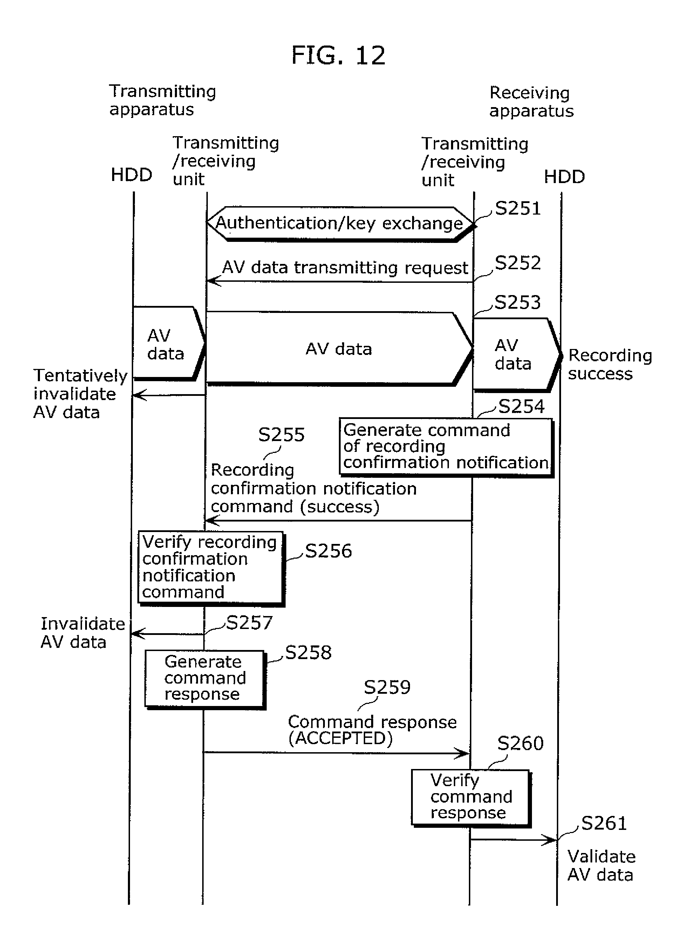

FIG. 12 is a diagram which shows a communication sequence in the case where moving of AV data has succeeded.

The authentication/key exchange is performed between the transmitting apparatus 2 and the receiving apparatus 3 (S251). The receiving apparatus 3 transmits an AV data transmitting request to the transmitting apparatus 2 (S252). The transmitting apparatus 2 transmits the requested AV data to the receiving apparatus 3 (S253). When the receiving apparatus 3 records the received AV data in the HDD 36, it generates a notification command indicating that the recording has succeeded and transmits the command to the transmitting apparatus 2 (S254 to S255). The transmitting apparatus 2 verifies the notification command (S256). In the case where the verification result is accepted, the transmitted AV data is invalidated (S257), the transmitting apparatus 2 generates a command response (ACCEPTED) and transmits it to the receiving apparatus 3 (S258 to S259). The receiving apparatus 3 verifies the command response (S260). In the case where the verification result is accepted, the received AV data is validated (S261), and the processing of moving the AV data is completed.

In the case where the recording of the AV data has failed, the receiving apparatus 3 generates a notification command indicating that the recording has failed and transmits the command to the transmitting apparatus 2. The transmitting apparatus 2 verifies the command response. In the case where the verification result is accepted, the transmitting apparatus 2 revalidates the transmitted AV data, generates a command response (ACCEPTED), and transmits it to the receiving apparatus 3. In this case, the AV data of the transmitting apparatus 2 is held without being invalidated. Thus, even in the case where the recording of the AV data has failed in the receiving apparatus 3, the AV data is never lost.

Here, assume that an unauthorized user intends to copy the AV data and tampers with the notification command so as to indicate that the recording of the AV data has failed, in the case where the receiving apparatus 3 which has succeeded in recording the AV data generates a notification command indicating that the receiving apparatus 3 has succeeded in recording the AV data and transmits the command to the transmitting apparatus 2. In this case, when the transmitting apparatus 2 verifies the notification command, the verification result is not accepted. Therefore, the transmitting apparatus 2 invalidates the transmitted AV data, generates a command response (REJECTED), and transmits it to the receiving apparatus 3. In this manner, even in the case where the unauthorized user intends to copy the AV data and tampers with the notification command, it is possible to prevent the copy of the AV data, as the AV data in the transmitting apparatus 2 is invalidated.

In addition, assume that the notification command is lost by accident, in the case where the receiving apparatus 3 which has succeeded in recording the AV data generates a notification command indicating that the receiving apparatus 3 has succeeded in recording the AV data and transmits the command to the transmitting apparatus 2. In this case, the transmitting apparatus 2 detects the time-out of receiving the notification command and invalidates the transmitted AV data. In this manner, even in the case where the notification command is lost by accident, it is possible to prevent the copy of the AV data, as the AV data in the transmitting apparatus 2 is invalidated.

As described above, according to the present first embodiment, in the case where the AV data having the "No More Copies" status is moved via the network, it is possible to reduce the danger that the AV data is lost and to prevent with certainty a malfunction that the same AV data exists both in the transmitting apparatus and receiving apparatus.

In other words, in the case where the receiving apparatus 3 has failed in recording the AV data, it is possible to prevent loss of the AV data by accident as the AV data is held in the transmitting apparatus 2.

In addition, a command number for identifying a command and verification information for verifying the command are added to a notification command and the command response. Therefore, as a result of preventing the unauthorized user from tampering with the notification command and the command response, it is possible to prevent an invalid copy.

In addition, after the receiving apparatus 3 tentatively invalidates the received AV data, in the case where it receives a command response indicating ACCEPTED in response to the notification command indicating that the recording has succeeded, the receiving apparatus 3 validates the AV data. Thus, even in the case where the AV data in the transmitting apparatus 2 is not invalidated by accident or by the unauthorized user, it is possible to prevent the invalid copy.

### (Second Embodiment)

Next, the second embodiment of the present invention is described hereinafter.

### <Outline>

In the second embodiment, identification information for identifying the AV data transmitted by the transmitting apparatus is set in a notification command. With this, the AV data transmitted by the transmitting apparatus and the notification command are associated with each other with certainty. This makes it possible to delete with certainty the AV data transmitted by the transmitting apparatus.

### <Configuration>

The configuration of the transmitting apparatus 2 and the receiving apparatus 3 in the second embodiment is the same as that of the first embodiment (refer to FIG. 3 and FIG. 4). The difference between the first and second embodiments lies in the respective formats of a notification command and the respective operations of the copy control unit 25 and copy control unit 35. Other than those, the configuration is the same as that of the first embodiment.

### <Notification command>

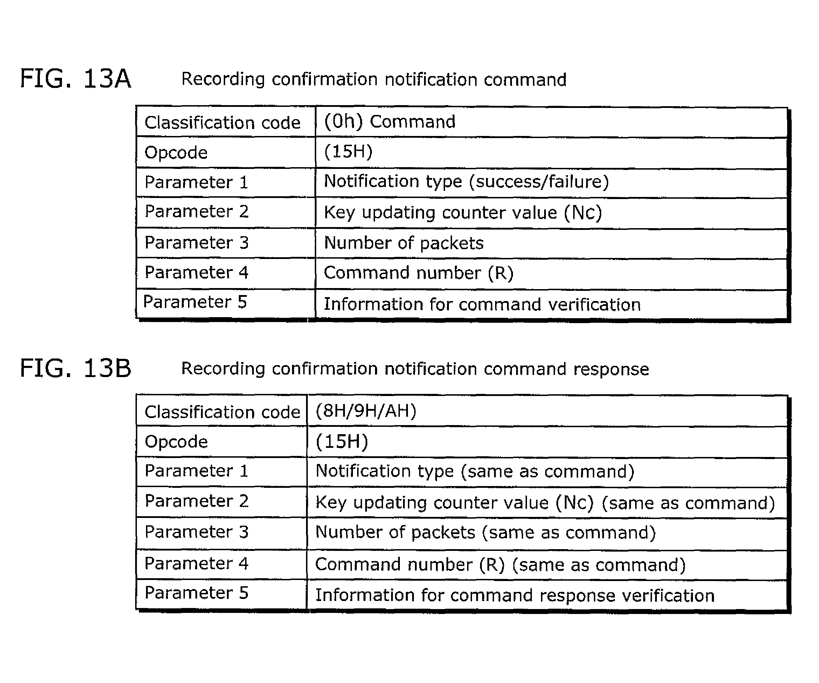

FIG. 13A is a diagram which shows a format of a notification command in the present second embodiment, and FIG. 13B is a diagram which shows a format of a command response in the present second embodiment.

The classification code and opcode are the same as that of the first embodiment.

As shown in FIG. 13A, the parameter field of a notification command is configured so as to include a notification type, a key updating counter value (Nc), the number of the packets, a command number (R), and information for command verification. As a notification type, a result of the recording processing indicating whether the recording has succeeded or failed is set. As a command number (R), a random number is used as the initial value, and every time the notification command is transmitted, the value increases by 1. As a key updating counter value (Nc), the key updating counter value which has been set in the header unit of the AV data packet which is positioned first in the received AV data is set without any change in the value. As the number of the packets, the number of the packets of the received AV data is set. The information for command verification is digital signature information. This digital signature information is generated with the use of an exchange key (Kx), using a notification type, a key updating counter value (Nc), the number of the packets, and a command number (R).

On the other hand, as shown in FIG. 13 (B), the parameter field of a command response is configured so as to include a notification type, a key updating counter value (Nc), the number of packets, a command number (R), and information for command verification. The same values as the parameters of the received notification command are set as a notification type, a key updating counter value (Nc), the number of the packets, and a command number (R). The information for command response verification is digital signature information. This digital signature information is generated with the use of an exchange key (Kx), using a notification type, a key updating counter value (Nc), the number of the packets, and a command number (R).

### <The operation of the transmitting apparatus 2>

The flow from the authentication/key exchange processing at the time of encryption transmission to the encryption transmission processing is the same as that of the first embodiment and is shown in FIG. 8. The flow of the recording confirmation processing in the transmitting apparatus 2 is the same as that of the first embodiment and is shown in FIG. 9. The present second embodiment differs from the first embodiment in the operation of the copy control unit 25 of the transmitting apparatus 2. Therefore, in the recording confirmation processing shown in FIG. 9, the details of the recording confirmation notification verification process of S104 and the command response generating processes of S109, S112, and S116 according to the second embodiment differs from that of the first embodiment.

In the recording confirmation notification verification process of S104 according to the present second embodiment, the copy control unit 35 first checks whether the key update count value (Nc) and the number of the packets of a notification command correspond to the values of the transmitted AV data. Next, the command number and information for command verification of the notification command are checked. In other words, in the case of receiving the notification command for two or more times, it is confirmed whether or not the command number (R) increases by 1 from the command number (R) which has been received last time, and whether or not the command is a valid command transmitted from a valid transmitting apparatus based on the information for command verification.

In the command response generating processes of S109, S112, and S116 according to the present second embodiment, the copy control unit 25 sets a classification code depending on the result of the processes of the command. Furthermore, the same values as the received notification command are set as an opcode, a notification type, a key updating counter value, the number of the packets, and a command number. Furthermore, the digital signature information is set as the information for command response verification. This digital signature information is generated with the use of an exchange key (Kx), using a notification type, a key updating counter value, the number of packets, and a command number.

### <The operation of the receiving apparatus 3>

The flow from the authentication/key exchange processing at the time of encryption transmission to the encryption transmission processing is the same as that of the first embodiment and is shown in FIG. 10. The flow of the recording confirmation processing in the receiving apparatus 3 is the same as that of the first embodiment and is shown in FIG. 11. The present second embodiment differs from the first embodiment in the operation of the copy control unit 35 of the receiving apparatus 3. Therefore, in the recording confirmation processing shown in FIG. 11, the details of the recording confirmation notification generating process of 5203 and the command response verification process of 5209 differ from those of the first embodiment.

In the recording confirmation notification generating process of 5203 according to the present second embodiment, a value indicating success or failure is set as the notification type, depending on a result of the recording. As a key updating counter value (Nc), the key updating counter value (Nc) set in the header unit of the AV data packet which is positioned first in the received AV data is set. As the number of packets, the number of the packets of the received AV data is set. The command number (R) and information for command verification are set, and the notification command is generated.

In the command response verification process of S209 according to the second embodiment, it is checked whether or not a notification type code, a key updating counter value (Nc), the number of packets, and a command number (R) are equal to the values in each parameter field of the transmitted notification command. Furthermore, it is checked whether or not the command response is a valid command response transmitted from a valid transmitting apparatus 2 by checking the information for command response verification.

Based on the aforementioned operations of the transmitting apparatus 2 and the receiving apparatus 3, the whole operation of the processing of moving the AV data is described hereinafter.

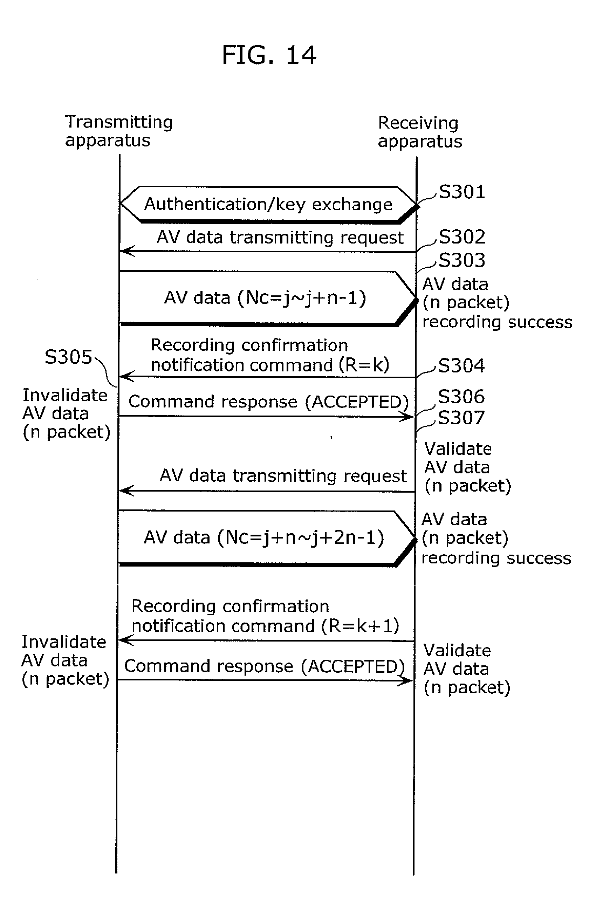

FIG. 14 is a diagram which shows a communication sequence in the case where moving of AV data has succeeded.

The authentication/key exchange processing is performed between the transmitting apparatus 2 and the receiving apparatus 3 (S301). The receiving apparatus 3 transmits an AV data transmitting request to the transmitting apparatus 2 (S302). The transmitting apparatus 2 transmits the requested AV data to the receiving apparatus 3 (5303). When the receiving apparatus 3 records the received AV data in the HDD 36, it sets the key updating counter value (Nc) and the number of the packets in a notification command indicating that the recording has succeeded, and transmits the command to the transmitting apparatus 2 (S304). The transmitting apparatus 2 verifies whether the notification command corresponds to the received AV data by checking the key updating counter value (Nc) and the number of the packets. In the case where the verification result is accepted, the transmitted AV data is invalidated (S305), the transmitting apparatus 2 generates a command response (ACCEPTED) and transmits it to the receiving apparatus 3 (S306). The receiving apparatus 3 verifies the command response. In the case where the verification result is accepted, the received AV data is validated, and the processing of moving the AV data is completed (S307). Until the end of the processing of moving the AV data, the aforementioned sequence is repeated.

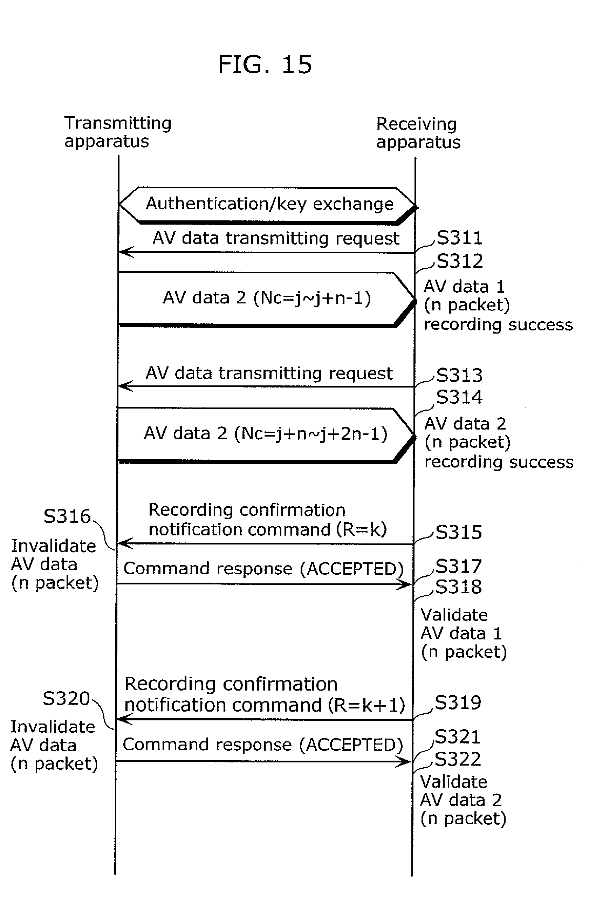

FIG. 15 is a diagram which shows a sequence in the case where the transmitting of a notification command has been delayed.

The receiving apparatus 3 transmits an AV data transmitting request requesting to transmit an AV data 1 to the transmitting apparatus 2 (S311). The transmitting apparatus 2 transmits the requested AV data 1 to the receiving apparatus 3 (S312). Here, it is assumed that the receiving apparatus 3 transmits another AV data transmitting request requesting to transmit another AV data 2, before transmitting the notification command which corresponds to the AV data 1 (S313). In this case, the transmitting apparatus 2 transmits the requested AV data 2 to the receiving apparatus 3 (S314).

Next, the receiving apparatus 3 sets a key updating counter value (Nc=j) and the number of the packets (n) in the notification command which corresponds to the received AV data 1, and transmits it to the transmitting apparatus 2 (S315). The transmitting apparatus 2 confirms whether or not the key updating counter value (Nc) and the number of the packets of the notification command correspond to the values of the transmitted AV data 1. Then, when the transmitting apparatus 2 confirms the correspondence, it invalidates the transmitted AV data 1 (S316), generates a command response (ACCEPTED) and transmits it to the receiving apparatus 3 (S317). The receiving apparatus 3 verifies the command response. In the case where the verification result is accepted, the received AV data is validated and the processing of moving the AV data is completed (S318).

Next, the receiving apparatus 3 sets a key updating counter value (Nc=j+n) and the number of the packets (n) in the notification command which corresponds to the received AV data 2, and transmits it to the transmitting apparatus 2 (S319). The transmitting apparatus 2 confirms whether or not the key updating counter value (Nc) and the number of the packets of the notification command correspond to the values of the transmitted AV data 2. Then, when the transmitting apparatus 2 confirms the correspondence, it invalidates the transmitted AV data 2 (S320), generates a command response (ACCEPTED) and transmits it to the receiving apparatus 3 (S321). The receiving apparatus 3 verifies the command response. In the case where the verification result is accepted, the received AV data is validated, and the processing of moving the AV data is completed (S322).

As described above, when the receiving apparatus 3 according to the present second embodiment verifies a notification command received from the receiving apparatus 3, the transmitting apparatus 2 checks whether or not the key updating counter value and the number of the packets included in the notification command correspond to the values of the transmitted AV data. Thus, the AV data received by the receiving apparatus 3 and the AV data transmitted by the transmitting apparatus 2 can be associated with each other with certainty. Therefore, in the case where the time when the transmitting apparatus 2 receives the notification command is delayed from the time when the transmitting apparatus 2 transmits the AV data, the transmitting apparatus 2 can delete with certainty the AV data corresponding to the received notification command.

Note that although the present second embodiment uses, for example, a key updating counter value and the number of the packets as information for identifying the AV data, the present invention is not limited to such a case. In other words, as long as the information can be used for identifying AV data, other information may be applied as the identification information.

### (Third Embodiment)

Next, the third embodiment is described hereinafter.

### <Outline>

In the third embodiment, the transmitting apparatus 2 divides AV data into packets and transmits to the receiving apparatus 3, and the recording confirmation processing is executed in each packet.

### <Configuration>

The configuration of the transmitting apparatus 2 and the receiving apparatus 3 in the third embodiment is the same as that of the first and second embodiments (refer to FIG. 3 and FIG. 4). The difference between the second and third embodiments lies in the respective formats of a notification command and the respective operations of the copy control unit 25 and copy control unit 35. Other than those, the configuration is the same as that of the second embodiment.

### <Notification command>

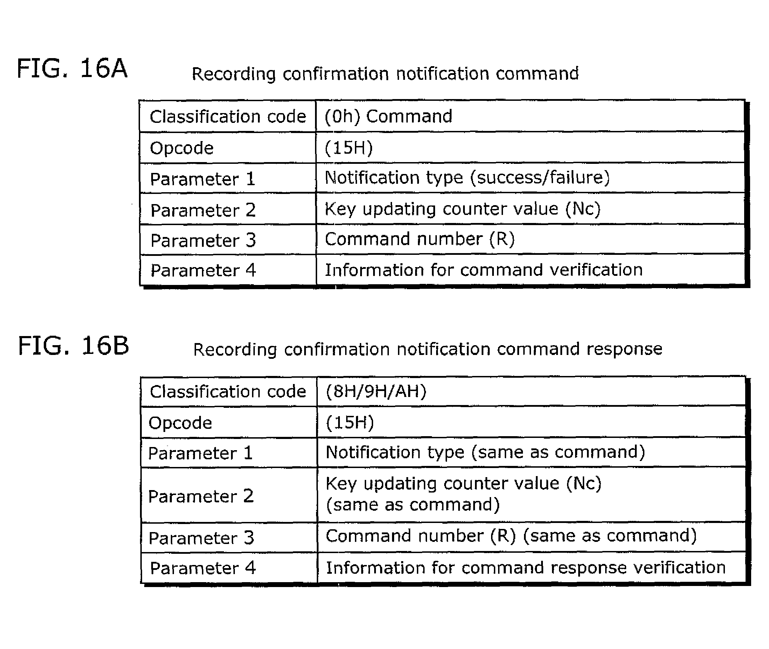

FIG. 16A is a diagram which shows a format of a notification command in the present third embodiment, and FIG. 16B is a diagram which shows a format of a command response in the present third embodiment.

The classification code and opcode are the same as that of the first and second embodiments.

As shown in FIG. 16A, the parameter field of the notification command is configured so as to include a notification type, a key updating counter value (Nc), a command number (R), and information for command verification. As a notification type, a result of the recording processing, in other words, whether the recording has succeeded or failed is set. As a command number (R), a random number is used as the initial value, and every time a notification command is transmitted, the value increases by 1. As a key updating counter value (Nc), the key updating counter value set in the header unit of the AV data packet which is positioned first in the received AV data is set without any change in the value. The information for command response verification is digital signature information. This digital signature information is generated with the use of an exchange key (Kx), using a notification type, a key updating counter value (Nc), the number of the packets, and a command number (R).

As a notification type, a key updating counter value (Nc), and a command number (R) of the notification command response, the same values as the parameters of the received command are set. The information for command response verification is digital signature information which is generated with the use of an exchange key (Kx), using a notification type, a key updating counter value (Nc), and a command number (R).

### <The operation of the transmitting apparatus 2>

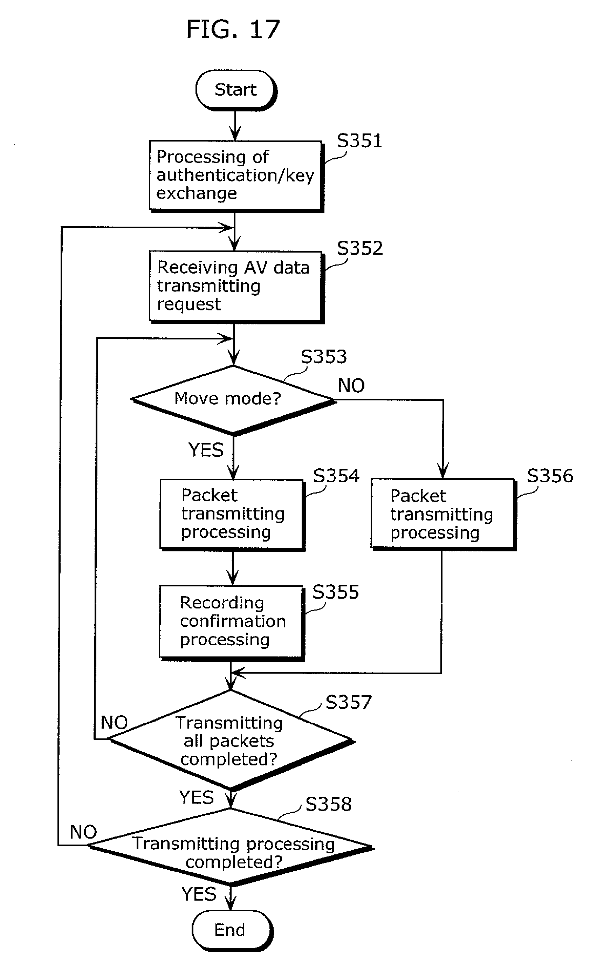

FIG.17 is a diagram which shows an operation of the transmitting apparatus 2 in the third embodiment. Here, the flow from the authentication/key exchange processing at the time of encryption transmission to the encryption transmission processing is described.

First, the authentication processing unit 24 of the transmitting apparatus 2 starts authentication/key exchange processing in response to an authentication request from the receiving apparatus 3, shares an exchange key with the receiving apparatus 3, and ends the authentication/key exchange processing (S351).

Next, the copy control unit 25 of the receiving apparatus 3 receives an AV data transmitting request from the receiving apparatus 3 (S352). In the case where the AV data transmitting request is a request of moving the AV data, the processing of transmitting a packet in MOVE mode (S354) and the recording confirmation processing (S355) are executed. Other than this case, the AV data transmitting processing is executed in the normal mode (S356).

The transmitting apparatus 2 according to the third embodiment transmits AV data as packets per block which is managed by the AV data management table, and manages it. Then, the transmitting apparatus 2 judges whether or not all packets have been transmitted (5357). In the case where a packet which should be transmitted remains, the processing is returned to S353, and the packet transmitting processing (S354) and the recording confirmation processing (355) are repeated. On the other hand, when the transmitting apparatus 2 transmits all packets, it judges whether or not the transmitting processing should be completed (5358). In the case where the AV data which should be transmitted remains, the transmitting apparatus 2 receives an AV data transmitting request from the receiving apparatus 3 (S352), and the transmitting processing is repeated.

### <The recording confirmation processing of the transmitting apparatus 2>

The flow of the recording confirmation processing in the transmitting apparatus 2 is the same as that of the first and second embodiments and is shown in FIG. 9. The third embodiment differs from the first and second embodiments in the operation of the copy control unit 25 of the transmitting apparatus 2. Therefore, in the recording confirmation processing shown in FIG. 9, the details of the recording confirmation notification verification process S104 and the command response generating processes of S109, S112, and S116 differ from those of the first and second embodiments.

In the recording confirmation notification verification process S104 in the third embodiment, the copy control unit 35 checks whether or not the key updating counter value (Nc) of a notification command corresponds to the value of a transmitted AV data packet. Next, the command number and information for command verification of the notification command are checked. In other words, in the case of receiving the notification command for two or more times, it is confirmed whether or not the command number (R) increases by 1 from the command number (R) which has been received last time, and whether or not the command is a valid command transmitted from a valid transmitting apparatus based on the information for command verification.

In the command response generating processes of S109, S112, and 5116 according to the present third embodiment, the copy control unit 25 sets a classification code depending on the result of the processes of the command. Furthermore, the same values as the received notification command are set as the opcode, notification type, key updating counter value, and command number. Furthermore, digital signature information is set as the information for command response verification. This digital signature information is generated with the use of an exchange key (Kx), the notification type, key updating counter value, and command number.

### <The operation of the receiving apparatus 3 >

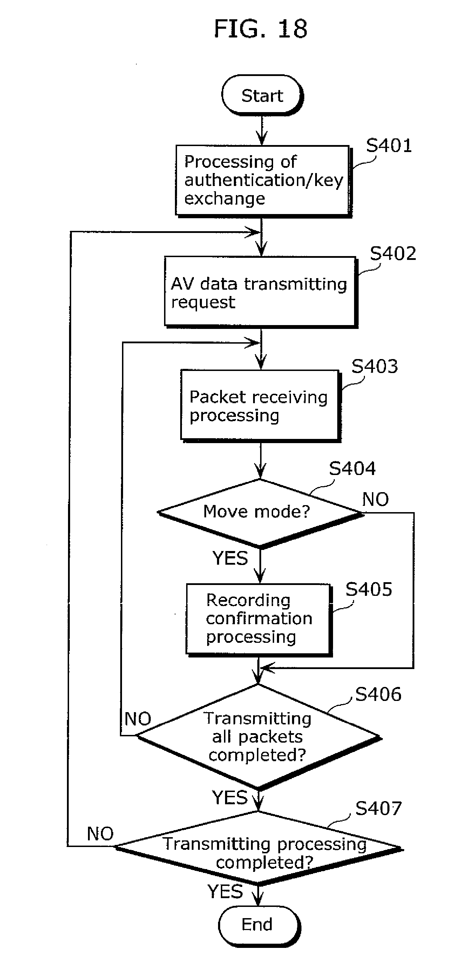

FIG.18 is a diagram which shows an operation of the receiving apparatus 3 in the third embodiment. Here, the flow from the authentication/key exchange processing at the time of encryption transmission to the encryption transmission processing is described hereinafter.

First, the authentication processing unit 34 of the receiving apparatus 3 starts the authentication/key exchange processing by transmitting an authentication request to the transmitting apparatus 2, obtains an exchange key from the transmitting apparatus 2, and ends the authentication/key exchange processing (S401).

Next, the copy control unit 35 of the receiving apparatus 3 transmits, to the transmitting apparatus 2, an AV data transmitting request for moving AV data (S402), and receives an AV data packet from the transmitting apparatus 2 (S403). Then, the copy control information (EMI) which is set in the header unit of the received AV data packet is checked (S404). As a result, in the case of using MOVE mode, the recording confirmation processing 5405 is executed, and in the case of using other than the MOVE mode, the recording confirmation processing is not executed.

Next, the receiving apparatus 3 judges whether it has received all packets (S406). In the case where any AV data which should be received remains, the processing is returned to 5403, and the packet receiving processing (S403) and recording confirmation processing (S405) are repeated. When the receiving apparatus 3 has received all packets, it judges whether or not the AV data which should be received has been received (S407). In the case where the AV data which should be received remains, the receiving apparatus 3 transmits an AV data transmitting request to the transmitting apparatus 2, and the receiving processing is repeated.

### <The recording confirmation processing of the receiving apparatus 3>

The flow of the recording confirmation processing in the receiving apparatus 3 is the same as those of the first and second embodiments and is shown in FIG.11. The third embodiment differs from the first and second embodiments in the operation of the copy control unit 35 of the receiving apparatus 3. Therefore, in the recording confirmation processing shown in FIG. 11, the details of the recording confirmation notification generating process of 5203 and the command response verification process of S209 differ from those of the first and second embodiments.

In the recording confirmation notification verification process of S104 in the third embodiment, the copy control unit 35 first checks whether or not the key updating counter value (Nc) of a notification command corresponds to the value of the transmitted AV data packet. Next, the command number and information for command verification of the notification command are checked. In other words, in the case of receiving the notification command for two or more times, it is confirmed whether or not the command number (R) increases by 1 from the command number (R) which has been received last time, and it is verified whether or not the command is a valid command transmitted from a valid transmitting apparatus based on the information for command verification.

In the recording confirmation notification generating process of S203 according to the present third embodiment, depending on a result of the recording, the value indicating success or failure is set as a notification type. As a key updating counter value (Nc), the key updating counter value which is set in the header unit of an AV data packet which is positioned first in the received AV data is set. The command number (R) and information for command verification are set, and the notification command is generated.

In 5209 of the third embodiment, it is checked whether or not a notification type code, a key updating counter value (Nc), and a command number (R) are equal to the respective values in each parameter field of the transmitted notification command. Furthermore, it is checked whether or not the command response is a valid command response transmitted from the valid transmitting apparatus 2 by checking the information for command response verification.

Based on the aforementioned operations of the transmitting apparatus 2 and the receiving apparatus 3, the whole operation of the processing of moving the AV data is described hereinafter.

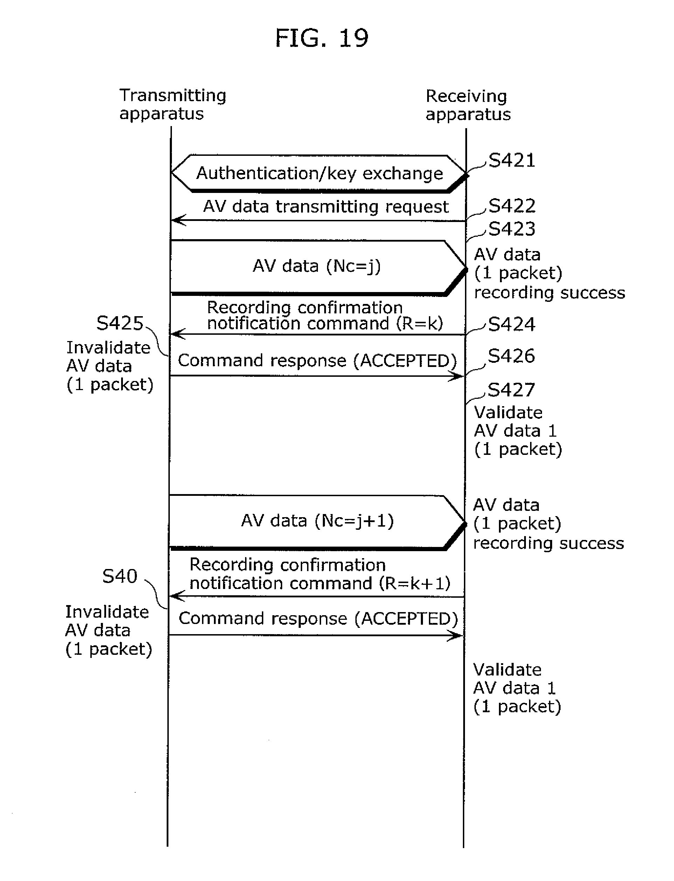

FIG. 19 is a diagram which shows a communication sequence in the case where moving of AV data has succeeded.

The authentication/key exchange processing is performed between the transmitting apparatus 2 and the receiving apparatus 3 (S421). The receiving apparatus 3 transmits an AV data transmitting request to the transmitting apparatus 2 (S422). The transmitting apparatus 2 transmits one of the packets of the requested AV data to the receiving apparatus 3 (S423). When the receiving apparatus 3 records one of the received AV data packet in the HDD 36, it sets the key updating counter value (Nc) of the received packet in a notification command indicating that the recording has succeeded, and transmits the command to the transmitting apparatus 2 (S424). The transmitting apparatus 2 verifies the notification command in details including whether the notification command corresponds to the command of the received AV data packet by checking the key updating counter value (Nc) of the notification command. In the case where the verification result is accepted, the AV data corresponding to the transmitted packet is invalidated (S425), the transmitting apparatus 2 generates a command response (ACCEPTED) and transmits it to the receiving apparatus 3 (S426). The receiving apparatus 3 verifies the command response. In the case where the verification result is accepted, the received AV data is validated, and the processing of moving the AV data is completed (5427). Until the completion of the processing of moving the AV data, the aforementioned sequence from the aforementioned 5423 to 5427 is repeated.

As described above, according to the present third embodiment, the transmitting apparatus 2 divides the AV data into plural AV data packets in response to an AV data transmitting request, and transmits the packets. In addition, every time the receiving apparatus 3 succeeds in recording a received packet in the HDD, it transmits a notification command to the transmitting apparatus 2, and executes the recording confirmation processing. Thus, the AV data and the notification command can be associated with each other per AV data packet. Therefore, as the AV data is deleted per packet with certainty, even in the case where the AV data is lost by accident, the lost data size can be reduced.

Note that although in the present third embodiment, the AV data is divided into the packets, and each packet is transmitted so as to execute the recording confirmation processing per packet, the present invention is not limited to such method. In other words, a block of the divided AV data may be transmitted without packetizing the data, and recording confirmation processing may be executed per block. Furthermore, the recording confirmation processing may be executed not per single packet but per plural packets.

### (Fourth Embodiment)

Next, the fourth embodiment of the present invention is described hereinafter.

### <Outline>

In the fourth embodiment, after transmitting AV data to the receiving apparatus 3, the transmitting apparatus 2 transmits a request confirmation request command to the receiving apparatus 3 and starts the recording confirmation processing.

### <Configuration>

The configuration of the transmitting apparatus 2 and the receiving apparatus 3 in the fourth embodiment is the same as that of the first embodiment to the third embodiment (refer to FIG. 3 and FIG. 4). The differences between this fourth embodiment and other embodiments are that the transmitting/receiving unit 21 serves as a request transmitting unit, that the transmitting/receiving unit 31 serves as a request receiving unit, and that the copy control unit 25 and copy control unit 35 control the transmission and receiving of a recording confirmation request command and a recording confirmation request command response. Other than those, the configuration is the same as that of the first embodiment.

### <Recording confirmation request command>

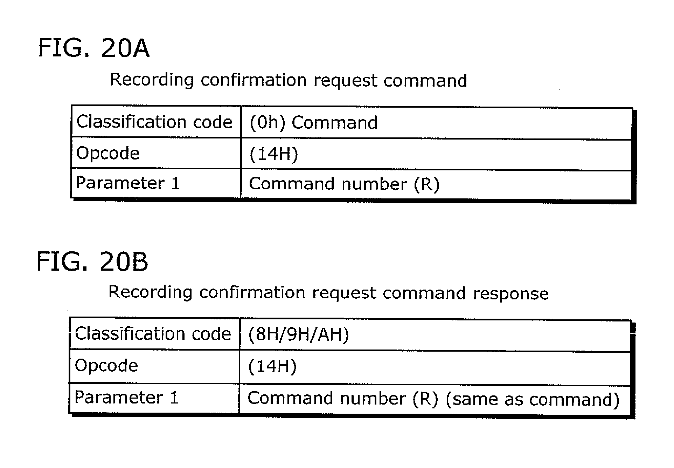

FIG. 20A is a diagram which shows a format of a recording confirmation request command in the fourth embodiment. This recording confirmation request command corresponds to a confirmation request of the present invention. FIG. 20B is a diagram which shows a format of a recording confirmation request command response in the fourth embodiment. Hereinafter, "recording confirmation request command" is referred to as "request command", "recording confirmation request command response" is referred to as "request command response", and "recording confirmation notification command response" is referred to as "notification command response".

The classification code of a request command is the same as that of the first to third embodiments. As an opcode of the request command, 14H is set, and as a request command in the parameter field, a command number (R) is set. As a command number (R), a random number is used as the initial value, and every time a request command is transmitted, the value increases by 1. The classification code of a request command response is the same as that of the first to third embodiments. As an opcode and a command number (R), the same values as the received command are set.

Note that the formats of a notification command and a notification command response are the same as that of the first embodiment, and is shown in FIG. 5.

### <The operation of the transmitting apparatus 2>

The flow from the authentication/key exchange processing at the time of encryption transmission to the encryption transmission processing is the same as that of the first embodiment, and is shown in FIG. 8. The fourth embodiment differs from the first embodiment in the details of the recording confirmation processing 555. The details are described hereinafter.

### <The recording confirmation processing of the transmitting apparatus 2>

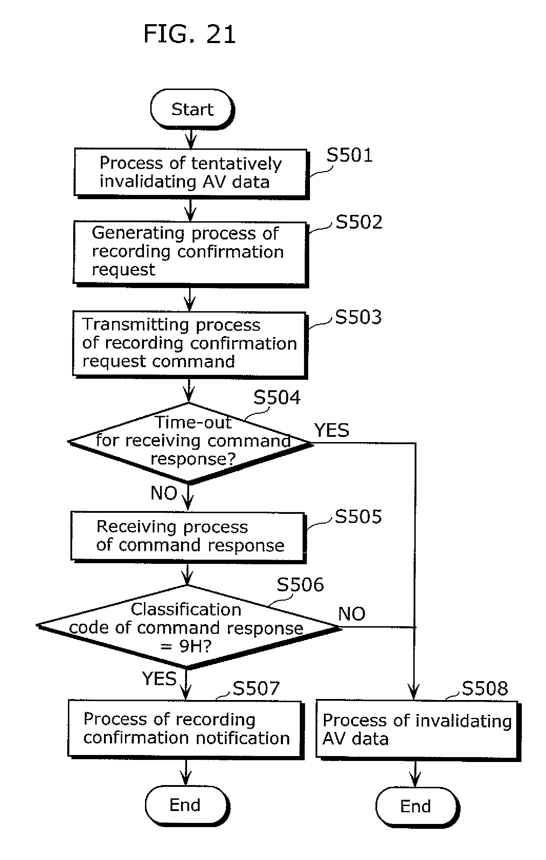

FIG. 21 is a diagram which shows a flow of the recording confirmation processing S55 in the fourth embodiment. This recording confirmation processing S55 is executed by the copy control unit 25 of the transmitting apparatus 2.

After the completion of transmitting the AV data, the copy control unit 25 rewrites the AV data management table in the HDD 26, invalidates the AV data (S501), generates a request command, transmits it to the receiving apparatus 3 (S502 to S503), and enters a request command response wait state.

Next, the copy control unit 25 judges whether to have received a request command within a predetermined time (1 second) (S504). Upon time-out, it is assumed that the confirmation process has failed, and the AV data is invalidated (S509), the processing ends. On the other hand, in the case of receiving a request command response without causing any time-out, the receiving process is started (S505). Then, the classification code of a command response is checked (S506). In the case where the classification code is 9H (ACCEPTED), the recording confirmation notification process 5507 is executed, and in other cases, the AV data is invalidated (S509) and the processing ends.

The recording confirmation notification process 5507 serves as the recording confirmation processing S55 of the transmitting apparatus 2 in the first embodiment, and is show in FIG. 9.

### <The operation of the receiving apparatus 3>

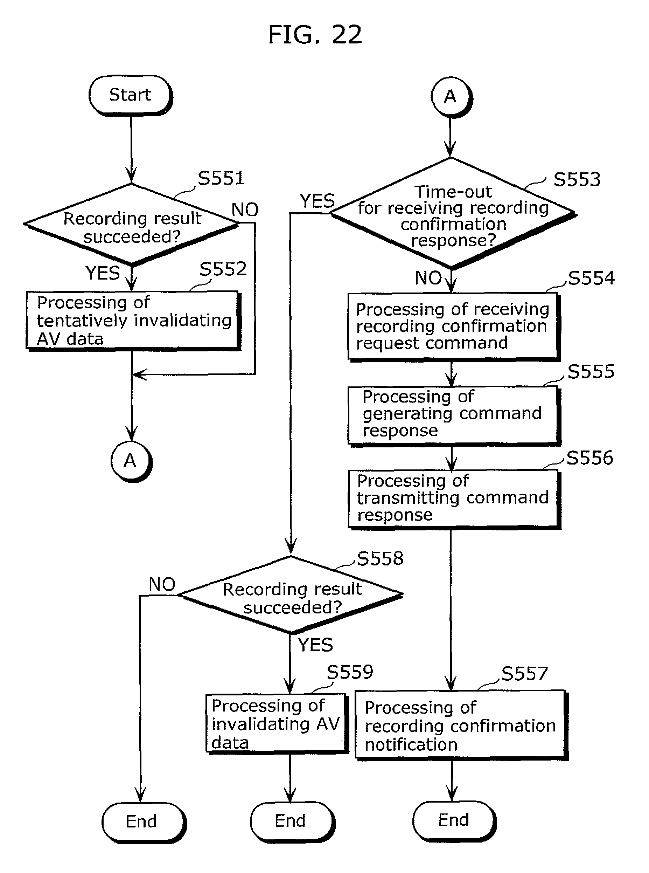

FIG.22 is a diagram which shows an operation of the receiving apparatus 3 in the fourth embodiment. Here, the flow of the recording confirmation processing is shown.

The copy control unit 35 of the receiving apparatus 3 confirms a result of recording of AV data (S551). Then, in the case where the recording of the AV data has succeeded, the copy control unit 35 rewrites the AV data management table in the HDD 36, and tentatively invalidates the AV data (S552).

Next, the copy control unit 35 enters a wait state for receiving a request command, and judges whether to have received a request command within a predetermined time (1 second) (S553). In the case of receiving the request command without causing any time-out, the processing of the received request command is started (S554), the command response is generated and transmitted to the transmitting apparatus 2 (S555 to S556). Then, the recording confirmation notification processing (S557) is executed, and the notification command is transmitted to the transmitting apparatus 2.

Upon time-out, the copy control unit 35 confirms a result of recording of the AV data again (S558). In the case where the recording has not succeeded (No at S558), the processing ends. In the case where the recording has succeeded (Yes at S558), the AV data management table in the HDD 36 is rewritten so as to invalidate the AV data (S559), and the processing ends.

The recording confirmation notification processing 5557 is the same as the recording confirmation processing S155 executed by the receiving apparatus 3 in the first embodiment, and is shown in FIG. 11. Note that as the tentatively invalidating processing has already been executed in the fourth embodiment, the processes after 5203 in FIG. 11 are executed.

Based on the aforementioned operations of the transmitting apparatus 2 and the receiving apparatus 3, the whole operation of the processing of moving the AV data is described hereinafter.

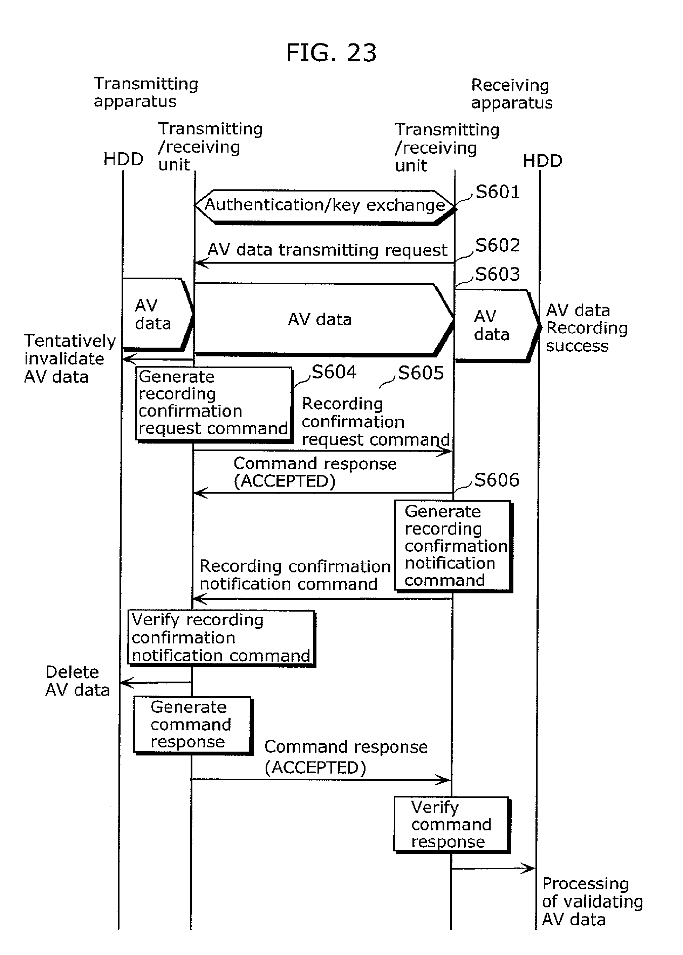

FIG. 23 is a diagram which shows a communication sequence in the case where moving of AV data has succeeded.

The authentication/key exchange processing is performed between the transmitting apparatus 2 and the receiving apparatus 3 (S601). The receiving apparatus 3 transmits an AV data transmitting request to the transmitting apparatus 2 (S602). The transmitting apparatus 2 transmits the requested AV data to the receiving apparatus 3 (S603). When the transmitting apparatus 2 completes the transmission of the AV data, it generates a request command that requests a recording confirmation and transmits it to the receiving apparatus 3 (S604 to S605). When the receiving apparatus 3 receives the request command, it generates a request command response (ACCEPTED) and transmits it to the transmitting apparatus 2 (S606).

The receiving apparatus 3 generates a notification command and transmits it to the transmitting apparatus 2. The subsequent processing is the same as the operation sequence after 5254 in the recording confirmation processing shown in FIG. 10.

As described above, according to the present fourth embodiment, the transmitting apparatus 2 can transmits, to the receiving apparatus 3, a recording confirmation request command by itself and start the recording confirmation processing. Thus, the transmitting apparatus 2 can determine when to perform the recording confirmation processing by itself, which makes it possible to flexibly set the time when to perform the recording confirmation processing and the size of the AV data on which the recording confirmation processing is performed.

Note that although each embodiment is described by categorizing the recording/reproducing apparatus into the transmitting apparatus 2 and receiving apparatus 3, it is obvious that the recording/reproducing apparatus may have both a transmitting function and a receiving function. In such a case, an HDD (a recording unit) may be shared by the transmitting function and receiving function, or it may be provided separately for each transmitting function and receiving function.

In addition, in each embodiment, although the transmitting apparatus 2 starts the transmitting and receiving of the AV data in response to an AV data transmitting request from the receiving apparatus 3, the present invention is not limited to such a case. In other words, the transmitting apparatus 2 may start the transmitting and receiving of the AV data by transmitting, to the receiving apparatus 3, an AV data receiving request, such as a POST request in HTTP.

In addition, in each embodiment, although an HDD is used as a recording unit, the recording unit in the present invention is not limited to such an HDD, and an optical disc device or a semiconductor memory may be used.

In addition, in each embodiment, although the transmitting apparatus 2 determines whether or not the AV data is transmitted in MOVE mode based on the details of an AV data transmitting request from the receiving apparatus 3, a setting means of MOVE mode is not limited to such. For example, using a user interface of the transmitting apparatus 2, it is possible to set whether or not the transmitting apparatus 2 transmits the AV data in MOVE mode.

In addition, in each embodiment, although the receiving apparatus 3 judges, based on the copy control information, whether or not the AV data is transmitted in MOVE mode, a judging means of MOVE mode is not limited to such. For example, when a transmitting mode is notified from the transmitting apparatus 2 to the receiving apparatus 3, the receiving apparatus 3 which has received this notification can judge whether or not the AV data is transmitted in MOVE mode.

In addition, in each embodiment, although it is assumed in the description that the AV data in the transmitting apparatus 2 is the AV data having the copy control information of the "No More Copies" status, the copy control information of the AV data is not limited to such a status. For example, even in the case where the AV data having the "Copy Never" status is moved, the present invention may be applied.

In addition, in each embodiment, although a command number which sequentially increases is used as the identification information of a command, as long as the command can be identified, other identification information may be applied. For example, a number generated from a random number can be used as the identification information of a command.

In addition, in each embodiment, although the receiving apparatus 3 transmits a notification command to the transmitting apparatus 2 after actually confirming a result of recording in the HDD which is a recording medium, the time when to transmit a notification command is not limited to this. For example, when the success of recording in a recording medium is obvious, a notification command may be transmitted to the transmitting apparatus 2 at the time when the AV data is written in a buffer memory.

In addition, in each embodiment, although the AV data on a recording medium is invalidated by rewriting the management information on the AV data management table, the method for invalidating AV data is not limited to this. For example, the related management information may be deleted from the AV data management table. Alternatively, the AV data recorded in a recording medium may be invalidated or deleted by other means.

### (Fifth Embodiment)

Next, the fifth embodiment is described.

Although the first to fourth embodiments primarily describe a communication sequence in the case where the moving of AV data has succeeded, the fifth embodiment primarily describes a communication sequence in the case where the moving of AV data has not succeeded.

First, the case where moving of AV data has succeeded is described.

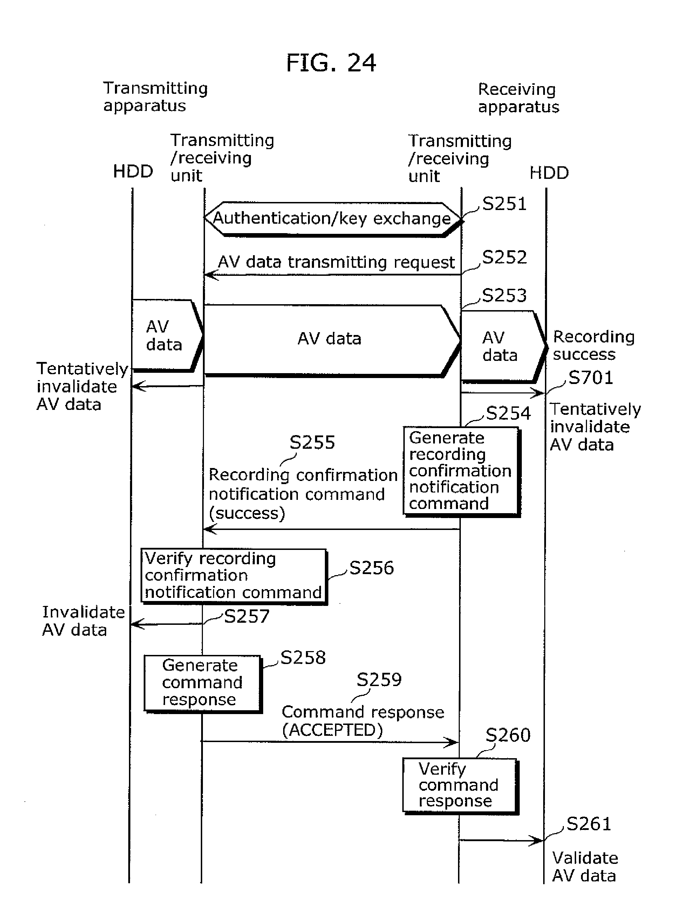

FIG. 24 is a diagram which shows a communication sequence in the case where moving of AV data has succeeded. This FIG. 24 is the same as FIG. 12 other than the point where S701 is specified. In other words, when the transmitting apparatus 2 transmits AV data to the receiving apparatus 3 (S251 to S252), the AV data on the transmitting apparatus 2 is tentatively invalidated. When the receiving apparatus 3 has succeeded in recording the AV data, the AV data on the receiving apparatus 3 is tentatively invalidated (S253 to S701). When the transmitting apparatus 2 knows that the recording of the AV data has succeeded, the AV data on the transmitting apparatus 2 is invalidated (S254 to S255 to S256 to S257). When the receiving apparatus 3 knows that the AV data on the transmitting apparatus 2 has been invalidated, the AV data on the receiving apparatus 3 is validated (S258 to 5259 to 5260 to S261). With this, the processing of moving the AV data has been completed.

Next, the case where the moving of AV data has not succeeded is described.

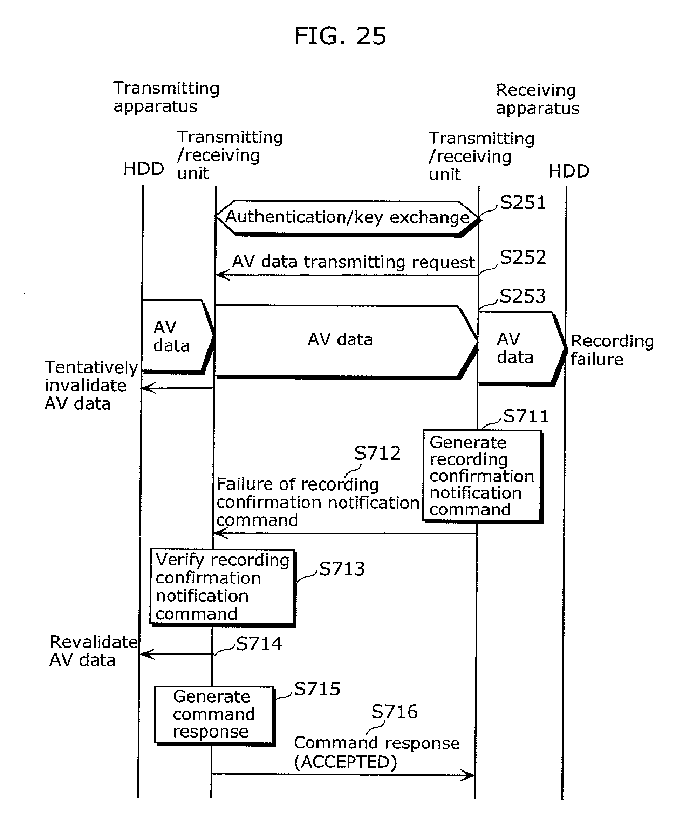

FIG. 25 is a diagram which shows a communication sequence in the case where moving of AV data has not succeeded. Here, the case where the recording of AV data has failed is described.

The processing until the AV data is recorded in the HDD 36 (S251 to 5252 to S253) is the same as mentioned earlier. Thus, the detailed description is omitted. When the receiving apparatus 3 has failed in recording the AV data, it generates a notification command indicating that the recording of the AV data has failed and transmits it to the transmitting apparatus 2 (S711 to S712). The transmitting apparatus 2 revalidates the AV data on the transmitting apparatus 2, generates a response indicating that the transmitting apparatus 2 has revalidated the AV data on the transmitting apparatus 2 and transmits it to the receiving apparatus 3 (S713 to S714 to S715 to S716). In this manner, in the case where the recording of AV data has failed, the AV data on the transmitting apparatus 2 is revalidated. With this, it is possible to prevent a malfunction of losing AV data.

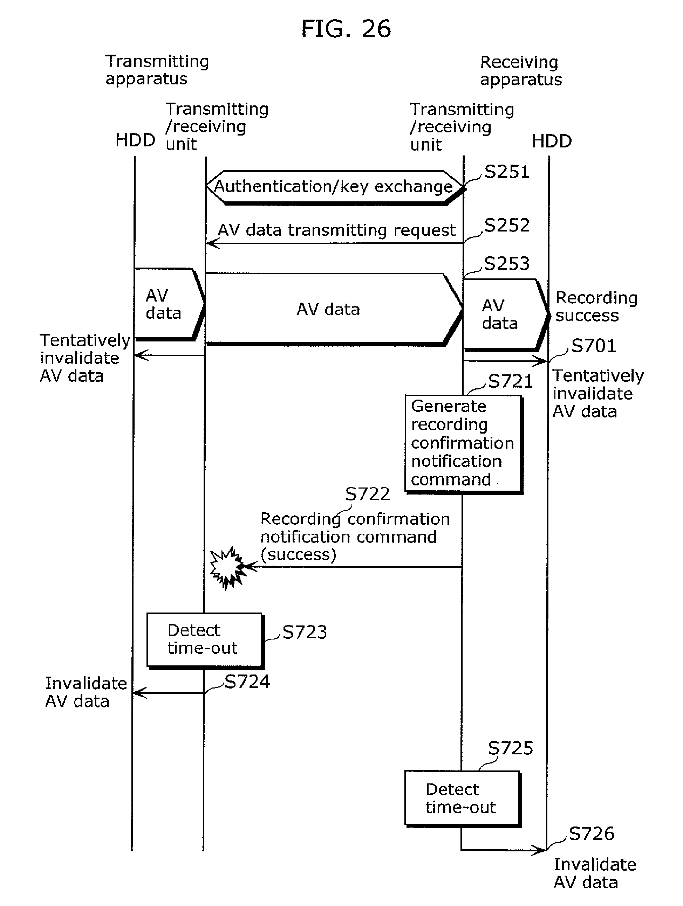

FIG. 26 is a diagram which shows a communication sequence in the case where moving of AV data has not succeeded. Here, the case where a communication command indicating that recording of AV data has succeeded is lost is described.

The processing until the communication command indicating that recording of AV data has succeeded is generated (S251 to 5252 to 5253 to 5701 to S721) is the same as mentioned earlier. Thus, the detailed description is omitted. Due to a network failure or the like, there is a case where this communication command is not normally transmitted from the receiving apparatus 3 to the transmitting apparatus 2. In this case, as the transmitting apparatus 2 does not receive a notification command even after a predetermined time interval, it detects time-out (S722 to S723) and invalidates the AV data on the transmitting apparatus 2 (S724). On the other hand, as the receiving apparatus 3 does not receive a response for the notification command even after a predetermined time interval, it also detects time-out (S725) and invalidates the AV data on the receiving apparatus 3 (S726). In this manner, in the case where the notification command indicating that the recording of AV data has succeeded is lost, the AV data on the transmitting apparatus 2 and AV data on the receiving apparatus 3 are invalidated. With this, it is possible to prevent a malfunction that the same AV data exists both in the transmitting apparatus 2 and the receiving apparatus 3.

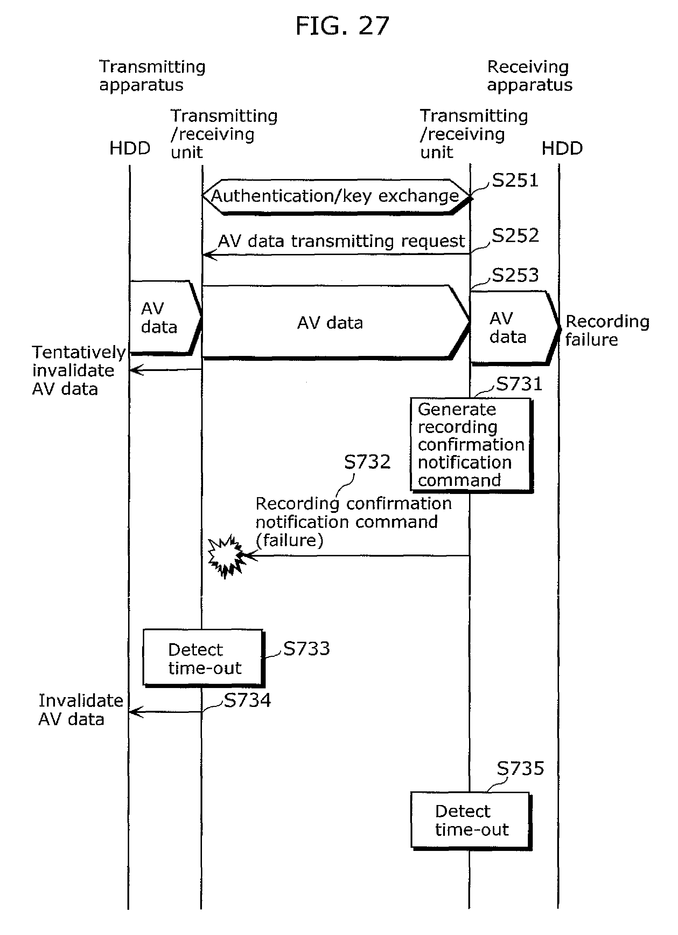

FIG. 27 is a diagram which shows a communication sequence in the case where moving of AV data has not succeeded. Here, the case where a notification command is lost which indicates that the recording of AV data has failed is described.

The processing until a notification command indicating that recording of AV data has failed is generated (S251 to 5252 to 5253 to S731) is the same as mentioned earlier. Thus, the detailed description is omitted. Due to a network failure or the like, there is a case where this notification command is not normally transmitted from the receiving apparatus 3 to the transmitting apparatus 2. In this case, as the transmitting apparatus 2 does not receive a notification command even after a predetermined time interval, it detects time-out (S732 to S733) and invalidates the AV data on the transmitting apparatus 2 (S734). On the other hand, as the receiving apparatus 3 does not receive a response for the notification command even after a predetermined time interval, it also detects time-out (S735). However, it does not perform the processing on the AV data as it fails in the recording. In this manner, in the case where a notification command indicating that the recording of AV data has failed is lost, the AV data on the transmitting apparatus 2 is invalidated. With this, it is possible to prevent a malfunction that the same AV data exists both in the transmitting apparatus 2 and the receiving apparatus 3.

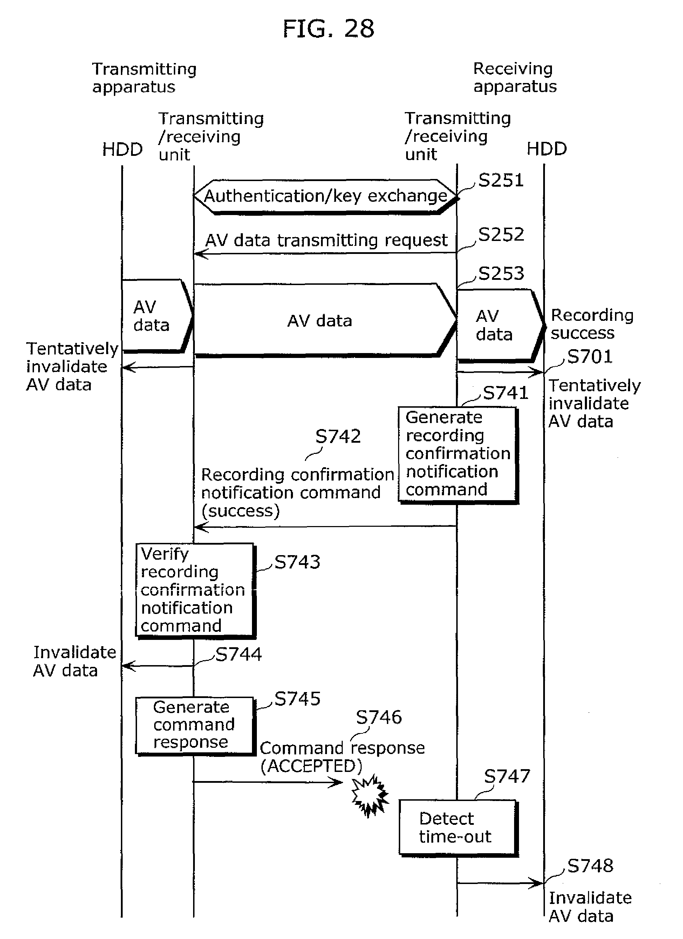

FIG. 28 is a diagram which shows a communication sequence in the case where moving of AV data has not succeeded. Here, the case where the notification command is lost which indicates that the recording of AV data has succeeded is described.

The processing until a notification command indicating that recording of AV data has succeeded is generated (S251 to 5252 to 5701 to S741) is the same as mentioned earlier. Thus, the detailed description is omitted. The transmitting apparatus 2 which has received this notification command invalidates the AV data on the transmitting apparatus 2 (S742 to S743 to S744), and generates the response indicating that the transmitting apparatus 2 has invalidated the AV data (S745). Due to a network failure or the like, there is a case where this response is not normally transmitted from the transmitting apparatus 2 to the receiving apparatus 3. In this case, as the receiving apparatus 3 does not receive a notification command even after a predetermined time interval, it detects time-out (S746 to S747) and invalidates the AV data on the receiving apparatus 3 (S748). In this manner, in the case where the response for a notification command indicating that the recording of AV data has succeeded is lost, the AV data on the transmitting apparatus 2 and the AV data on the receiving apparatus 3 are invalidated. With this, it is possible to prevent a malfunction that the same AV data exists both in the transmitting apparatus 2 and the receiving apparatus 3.

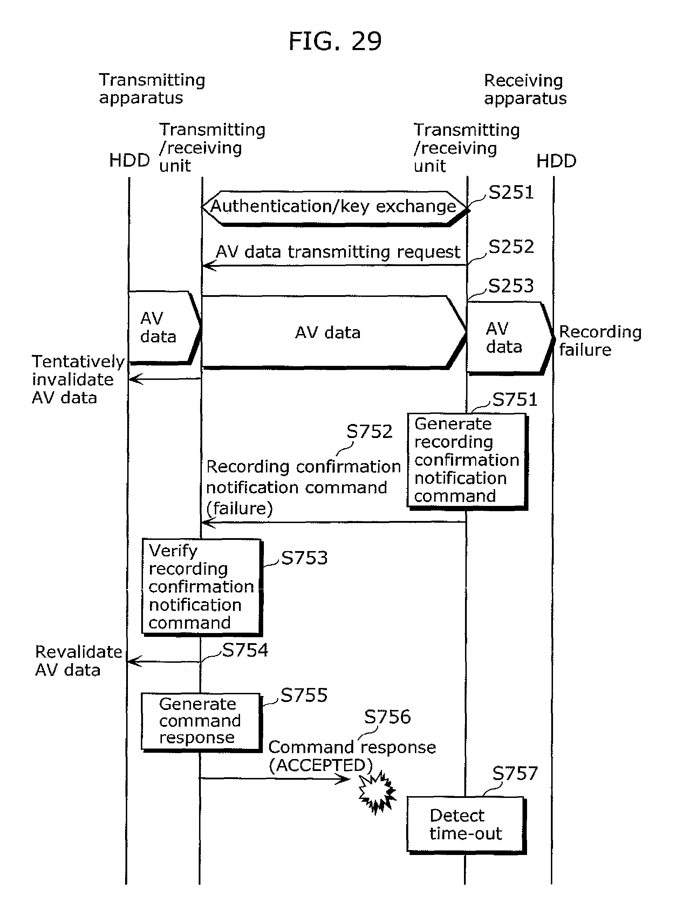

FIG. 29 is a diagram which shows a communication sequence in the case where moving of AV data has not succeeded. Here, the case where a notification command is lost which indicates that the recording of AV data has failed is described.

The processing until the notification command indicating that recording of AV data has failed is generated (S251 to 5252 to 5253 to S751) is the same as mentioned earlier. Thus, the detailed description is omitted. The transmitting apparatus 2 which has received this notification command revalidates the AV data on the transmitting apparatus 2 (S752 to 5753 to S754), and generates the response indicating that the transmitting apparatus 2 has revalidated the AV data (S755). Due to a network failure or the like, there is a case where this response is not normally transmitted from the transmitting apparatus 2 to the receiving apparatus 3. In this case, as the receiving apparatus 3 does not receive a response for the notification command even after a predetermined time interval, it detects time-out (S756 to S757). However, it does not perform the processing on the AV data as it fails in the recording. In this manner, in the case where the response for the notification command indicating that the recording of AV data has failed is lost, the AV data on the transmitting apparatus 2 is revalidated. With this, it is possible to prevent a malfunction that the AV data is lost.

As described above, according to the present invention, in the case where the AV data having the "No More Copies" status is moved to an other recording/reproducing apparatus via the network, it is possible to reduce the danger that the AV data is lost and to prevent with certainty a malfunction that the same AV data exists both in the transmitting apparatus and receiving apparatus.

Note that although in the aforementioned description, it is assumed that a notification command indicating that the recording of AV data has failed is transmitted from the receiving apparatus 3 to the transmitting apparatus 2, the present invention is not limited to this. In other words, in the case where the recording of AV data has not succeeded, it is possible to produce the similar effect by transmitting, from the receiving apparatus 3 to the transmitting apparatus 2, a notification command indicating that the processing is aborted. The time when the receiving apparatus 3 transmits this abort notification command to the transmitting apparatus 2 does not necessarily have to be the time after the completion of the transmission of AV data on a single file basis. For example, in the case where the recording of a single packet of AV data has failed, upon the detection of the failure, the receiving apparatus 3 may transmit an abort notification command to the transmitting apparatus 2.

Note that in the aforementioned description, although it is assumed that the transmitting apparatus 2 tentatively invalidates the AV data transmitted to the receiving apparatus 3, the present invention is not limited to this. In other words, the AV data transmitted to the receiving apparatus 3 has only to be placed in an inaccessible state by a certain technical means. In other words, as long as AV data is in an inaccessible state, the management information of the AV data may remain valid.

Note that in the aforementioned description, in the case where the transmitting apparatus 2 detects time-out by receiving a notification command from the receiving apparatus 3, it is assumed that it invalidates the AV data. However, the present invention is not limited to this. In the case where the receiving apparatus 3 detects time-out by receiving a notification command from the transmitting apparatus 2 and controls the received AV data so as to invalidate it with certainty, the transmitting apparatus 2 may validate the AV data.

Note that the concept "validating AV data", "revalidating AV data", or "placing AV data in an accessible state" is included in the concept "making AV data usable", although the aforementioned description does not particularly mention it. Alternatively, the concept "invalidating AV data", "tentatively invalidating AV data", or "placing AV data in an inaccessible state" is included in the concept "not making AV data usable".

### Industrial Applicability

The present invention is useful for transmitting AV data in which copyright protection is necessary.

## Claims

1. An AV data transmitting apparatus which transmits AV data to an other apparatus, said apparatus comprising:
a recording unit operable to record the AV data;
an AV data transmitting unit operable to transmit the AV data recorded by said recording unit to the other apparatus;
a notification receiving unit operable to receive a success notification indicating that the recording of the AV data has succeeded from the other apparatus;
a control unit operable to delete or invalidate the AV data recorded by said recording unit when the success notification is received by said notification receiving unit; and
a response transmitting unit operable to transmit a notification response indicating a result of the processing performed by said control unit to the other apparatus.

2. The AV data transmitting apparatus according to Claim 1,
wherein said notification receiving unit is operable to receive a failure notification indicating that the recording of the AV data has failed from the other apparatus, and
said control unit is operable to control the AV data recorded by said recording unit to be usable when the failure notification is received by said notification receiving unit, the AV data being recorded by said recording unit.

3. The AV data transmitting apparatus according to Claim 1,
wherein said notification receiving unit is operable to receive an abort notification indicating that the processing is aborted from the other apparatus, and
said control unit is operable to control the AV data recorded by said recording unit to be usable when the abort notification is received by said notification receiving unit.

4. The AV data transmitting apparatus according to Claim 1,
wherein said AV data transmitting unit is operable to add identification information to the AV data for identifying the AV data, and to transmit the AV data with the identification information,
said notification receiving unit is operable to receive the success notification having identification information added thereto, and
said control unit is operable to control the transmitted AV data not to be usable when the identification information which has been added to the transmitted AV data does not correspond to the identification information which has been added to the received success notification.

5. The AV data transmitting apparatus according to Claim 1,
wherein said AV data transmitting unit is operable to divide the AV data on a predetermined unit basis, and to transmit the AV data on the predetermined unit basis, and
said control unit is operable to delete or invalidate the AV data on the predetermined unit basis.

6. The AV data transmitting apparatus according to Claim 1, further comprising
a request transmitting unit operable to transmit a confirmation request for transmitting the success notification to the other apparatus.

7. The AV data transmitting apparatus according to Claim 1,
wherein said notification receiving unit is operable to receive the success notification having verification information for verifying the success notification added thereto, and
said control unit is operable to verify whether or not the success notification is valid based on the verification information which has been added to the success notification, and to control the AV data not to be usable when the verification has failed.

8. The AV data transmitting apparatus according to Claim 1,
wherein said notification receiving unit is operable to receive the success notification having identification information for identifying the success notification added thereto, and
said control unit is operable to confirm whether the success notification is not the success notification which has already been received based on the identification information which has been added to the success notification, and to control the AV data not to be usable when the confirmation has failed.

9. The AV data transmitting apparatus according to Claim 1,
wherein said response transmitting unit is operable to add verification information for verifying the notification response to the notification response, and to transmit the notification response with the added verification information.

10. An AV data receiving apparatus which receives AV data from an other apparatus, said apparatus comprising:
an AV data receiving unit operable to receive the AV data from the other apparatus;
a recording unit operable to record the AV data received by said AV data receiving unit;
a notification transmitting unit operable to transmit a success notification indicating that the recording of the AV data has succeeded to the other apparatus when the recording of the AV data has succeeded;
a response receiving unit operable to receive a notification response indicating a result of the processing performed by the other apparatus from the other apparatus; and
a control unit operable to control the AV data not to be usable after said AV data receiving unit receives the AV data, and to control the AV data to be usable, after said response receiving unit receives the notification response.

11. The AV data receiving apparatus according to Claim 10,
wherein said notification transmitting unit is operable to transmit a failure notification indicating that the recording of the AV data has failed to the other apparatus, and
said control unit is operable to control the AV data not to be usable after said AV data receiving unit receives the AV data and to control the AV data not to be usable even after said response receiving unit receives the notification response.

12. The AV data receiving apparatus according to Claim 10,
wherein said notification transmitting unit is operable to transmit an abort notification indicating that the processing is aborted to the other apparatus, and
said control unit is operable to control the AV data not to be usable after said AV data receiving unit receives the AV data and to control the AV data not to be usable even after said response receiving unit receives the notification response.

13. The AV data receiving apparatus according to Claim 10,
wherein said AV data receiving unit is operable to receive the AV data having identification information for identifying the AV data added thereto, and
said notification transmitting unit is operable to transmit the success notification having the identification information.

14. The AV data receiving apparatus according to Claim 10,
wherein said AV data receiving unit is operable to receive the AV data divided on a predetermined unit basis, and
said control unit is operable to control the success notification so as to transmit the success notification on the predetermined unit basis.

15. The AV data receiving apparatus according to Claim 10, said apparatus further comprising
a request receiving unit operable to receive a confirmation request for transmitting the success notification from the other apparatus,
wherein said control unit is operable to control a confirmation notification so as to be transmitted to the other apparatus when the confirmation request is received by said request receiving unit, and
the confirmation notification indicates a result of the recording of the AV data.

16. The AV data receiving apparatus according to Claim 10,
wherein said response receiving unit is operable to receive the notification response having verification information for verifying the success notification added thereto, and
said control unit is operable to verify whether or not the notification response is valid based on the verification information which has been added to the notification response, and to control the AV data not to be usable when the verification has failed.

17. The AV data receiving apparatus according to Claim 10,
wherein said notification transmitting unit is operable to add identification information for identifying the success notification to the success notification, and to transmit the success notification with the added identification information.

18. The AV data receiving apparatus according to Claim 10,
wherein said notification transmitting unit is operable to add verification information for verifying the success notification to the success notification and to transmit the success notification with the added verification information.

19. An AV data transmitting method which transmits AV data to an other apparatus, said method comprising:
a recording step of recording the AV data;
an AV data transmitting step of transmitting the AV data recorded in said recording step to the other apparatus;
a notification receiving step of receiving a success notification indicating that the recording of the AV data has succeeded from the other apparatus;
a control step of deleting or invalidating the AV data recorded in said recording step, when the success notification is received in said notification receiving step; and
a response transmitting step of transmitting a notification response indicating a result of said control step to the other apparatus.

20. An AV data receiving method which receives AV data from an other apparatus, said method comprising:
an AV data receiving step of receiving the AV data from the other apparatus;
a recording step of recording the AV data received in said AV data receiving step;
a notification transmitting step of transmitting a success notification indicating that the recording of the AV data has succeeded to the other apparatus when the recording of the AV data has succeeded;
a response receiving step of receiving a notification response indicating a result of the processing performed by the other apparatus from the other apparatus; and
a control step of controlling the AV data not to be usable after receiving the AV data in said AV data receiving step and controlling the AV data to be usable after receiving the notification response in said response receiving step.

21. A program recording medium on which a program causing a computer to execute respective steps described in one of Claim 19 and Claim 20 is recorded.

## Amended claims

### Amended claims under Art. 19.1 PCT

**1.** An AV data transmitting apparatus which transmits AV data to an other apparatus, said apparatus comprising:
a recording unit operable to record the AV data;
an AV data transmitting unit operable to transmit the AV data recorded by said recording unit to the other apparatus;
a notification receiving unit operable to receive a success notification indicating that the recording of the AV data has succeeded from the other apparatus;
a control unit operable to delete or invalidate the AV data recorded by said recording unit when the success notification is received by said notification receiving unit; and
a response transmitting unit operable to transmit a notification response indicating a result of the processing performed by said control unit to the other apparatus.

**2.** The AV data transmitting apparatus according to Claim 1,
wherein said notification receiving unit is operable to receive a failure notification indicating that the recording of the AV data has failed from the other apparatus, and
said control unit is operable to control the AV data recorded by said recording unit to be usable when the failure notification is received by said notification receiving unit, the AV data being recorded by said recording unit.

**3.** The AV data transmitting apparatus according to Claim 1,
wherein said notification receiving unit is operable to receive an abort notification indicating that the processing is aborted from the other apparatus, and
said control unit is operable to control the AV data recorded by said recording unit to be usable when the abort notification is received by said notification receiving unit.

**4.** The AV data transmitting apparatus according to Claim 1,
wherein said AV data transmitting unit is operable to add identification information to the AV data for identifying the AV data, and to transmit the AV data with the identification information,
said notification receiving unit is operable to receive the success notification having identification information added thereto, and
said control unit is operable to control the transmitted AV data not to be usable when the identification information which has been added to the transmitted AV data does not correspond to the identification information which has been added to the received success notification.

**5.** The AV data transmitting apparatus according to Claim 1,
wherein said AV data transmitting unit is operable to divide the AV data on a predetermined unit basis, and to transmit the AV data on the predetermined unit basis, and
said control unit is operable to delete or invalidate the AV data on the predetermined unit basis.

**6.** The AV data transmitting apparatus according to Claim 1, further comprising
a request transmitting unit operable to transmit a confirmation request for transmitting the success notification to the other apparatus.

**7.** The AV data transmitting apparatus according to Claim 1,
wherein said notification receiving unit is operable to receive the success notification having verification information for verifying the success notification added thereto, and
said control unit is operable to verify whether or not the success notification is valid based on the verification information which has been added to the success notification, and to control the AV data not to be usable when the verification has failed.

**8.** (Amended) The AV data transmitting apparatus according to Claim 1,
wherein said notification receiving unit is operable to receive the success notification to which a command number for identifying the success notification is added, and
said control unit is operable to confirm that the success notification is not the success notification which has already been received based on the command number, and to control the AV data not to be usable when the confirmation has failed.

**9.** The AV data transmitting apparatus according to Claim 1,
wherein said response transmitting unit is operable to add verification information for verifying the notification response to the notification response, and to transmit the notification response with the added verification information.

**10.** An AV data receiving apparatus which receives AV data from an other apparatus, said apparatus comprising:
an AV data receiving unit operable to receive the AV data from the other apparatus;
a recording unit operable to record the AV data received by said AV data receiving unit;
a notification transmitting unit operable to transmit a success notification indicating that the recording of the AV data has succeeded to the other apparatus when the recording of the AV data has succeeded;
a response receiving unit operable to receive a notification response indicating a result of the processing performed by the other apparatus from the other apparatus; and
a control unit operable to control the AV data not to be usable after said AV data receiving unit receives the AV data, and to control the AV data to be usable, after said response receiving unit receives the notification response.

**11.** The AV data receiving apparatus according to Claim 10,
wherein said notification transmitting unit is operable to transmit a failure notification indicating that the recording of the AV data has failed to the other apparatus, and
said control unit is operable to control the AV data not to be usable after said AV data receiving unit receives the AV data and to control the AV data not to be usable even after said response receiving unit receives the notification response.

**12.** The AV data receiving apparatus according to Claim 10,
wherein said notification transmitting unit is operable to transmit an abort notification indicating that the processing is aborted to the other apparatus, and
said control unit is operable to control the AV data not to be usable after said AV data receiving unit receives the AV data and to control the AV data not to be usable even after said response receiving unit receives the notification response.

**13.** The AV data receiving apparatus according to Claim 10,
wherein said AV data receiving unit is operable to receive the AV data having identification information for identifying the AV data added thereto, and
said notification transmitting unit is operable to transmit the success notification having the identification information.

**14.** The AV data receiving apparatus according to Claim 10,
wherein said AV data receiving unit is operable to receive the AV data divided on a predetermined unit basis, and
said control unit is operable to control the success notification so as to transmit the success notification on the predetermined unit basis.

**15.** The AV data receiving apparatus according to Claim 10, said apparatus further comprising
a request receiving unit operable to receive a confirmation request for transmitting the success notification from the other apparatus,
wherein said control unit is operable to control a confirmation notification so as to be transmitted to the other apparatus when the confirmation request is received by said request receiving unit, and
the confirmation notification indicates a result of the recording of the AV data.

**16.** The AV data receiving apparatus according to Claim 10,
wherein said response receiving unit is operable to receive the notification response having verification information for verifying the success notification added thereto, and
said control unit is operable to verify whether or not the notification response is valid based on the verification information which has been added to the notification response, and to control the AV data not to be usable when the verification has failed.

**17.** (Amended) The AV data receiving apparatus according to Claim 10,
wherein said notification transmitting unit is operable to add a command number for identifying the success notification to the success notification, and to transmit the success notification with the added command number.

**18.** The AV data receiving apparatus according to Claim 10,
wherein said notification transmitting unit is operable to add verification information for verifying the success notification to the success notification and to transmit the success notification with the added verification information.

**19.** An AV data transmitting method which transmits AV data to an other apparatus, said method comprising:
a recording step of recording the AV data;
an AV data transmitting step of transmitting the AV data recorded in said recording step to the other apparatus;
a notification receiving step of receiving a success notification indicating that the recording of the AV data has succeeded from the other apparatus;
a control step of deleting or invalidating the AV data recorded in said recording step, when the success notification is received in said notification receiving step; and
a response transmitting step of transmitting a notification response indicating a result of said control step to the other apparatus.

**20.** An AV data receiving method which receives AV data from an other apparatus, said method comprising:
an AV data receiving step of receiving the AV data from the other apparatus;
a recording step of recording the AV data received in said AV data receiving step;
a notification transmitting step of transmitting a success notification indicating that the recording of the AV data has succeeded to the other apparatus when the recording of the AV data has succeeded;
a response receiving step of receiving a notification response indicating a result of the processing performed by the other apparatus from the other apparatus; and
a control step of controlling the AV data not to be usable after receiving the AV data in said AV data receiving step and controlling the AV data to be usable after receiving the notification response in said response receiving step.

**21.** A program recording medium on which a program causing a computer to execute respective steps described in one of Claim 19 and Claim 20 is recorded.
